# EUROPEAN PATENT SPECIFICATION

(11) **EP 1 667 453 B1**
(45) Date of publication and mention of the grant of the patent: **10.06.2009**
(21) Application number: 06075388.6
(22) Date of filing: 01.03.2002
(51) Int. Cl.: H04N 7/173, H04N 7/16

(54) **Local distribution system**
Lokales Distributionssystem
Système de distribution locale

(30) Priority: 17.04.2001 GB 0109409; 02.11.2001 GB 0126398; 13.11.2001 GB 0127249; 11.02.2002 WO PCT/GB02/00596
(43) Date of publication of application: 07.06.2006
(62) Divisional of application: 02702513.9
(73) Proprietor: Quadriga Technology Limited, London W4 4AL (GB)
(72) Inventor: Garstone, Adam Jarvis, Cambridge CB1 3BY (GB); Plimmer, Colin Donald, Royston Herts SG11 6NG (GB); Jamieson, Ian Laurence, Cambridge CB1 9LZ (GB); Fisk, Julian Basil, Cambridge CB4 9JA (GB); Austin, Terry Alan, The Barn, Berks RG41 4TN (GB); Kotak, Kaushik, Cambridge CB1 1QE (GB); Page, Julia Christine Anne, Sandy Bedsfordshire SG19 3AW (GB)
(74) Representative: Hyden, Martin Douglas

(56) References cited:
- EP-A- 0 955 638
- WO-A-01/10125
- US-A- 6 038 425
- US-A- 6 166 735

## Description

### Technical field

The present invention relates among other things to the distribution and networking of television, video and other signals.

### Background art

Conventional distribution systems employ a server and one or more receivers distributed on a network. Such systems distribute content directly to each receiver, and typically each receiver is controlled by a single user or is associated with a single primary output device. Such systems are suitable for large numbers of widely distributed users, but are not ideally suited to the distribution of content to clusters of users. Other types of distribution system include, for example, those described in:
US 6 038 425, which describes a system for redistributing a multiple input audio/video signals having a redistributing device equipped to receive signals in a multiple formats and redistribute a selected signal to a user's premises over existing twisted-pair telephone wire. The redistributing device is in interactive communication with a communications interface located in the user's premises which receives user-input control signals and contains switching circuitry which routes the selected signal to the user's premises where it is received by the receiving unit such as a television receiver. A single redistributing device services an entire multi-user network from a common distribution point, and services multiple users independently; and
WO 01/10125 describes a system and method for delivering data to multiple end users using distributed storage system connected through a data communications network. The end user equipment for audio or video playback or recording contains a storage unit, such as a magnetic disk. Each storage unit can store data, such as digital video content, i.e. movies, or digital audio content, i.e. songs. The storage unit can also be configured to store portions, or fragments, of digital video or audio content, where the storage location, playback, and recording of digital video or audio content of each storage unit is administered, managed and controlled by a central facility. The content for playback of a video or audio content, or portions thereof, may reside on one or more physically separate storage unit, or may also reside on a central storage unit.

It is known to provide local servers to distribute content to such clusters of users, but the use of such local servers raises a number of difficulties in maintaining control of and communication between such local servers, and in providing the appropriate service for each user of the system regardless of which local server they receive content from.

Such difficulties are exacerbated if it is desired to distribute a range of different types of data, if users are transient, using different local servers at different times, if it is desired to maintain centralised control of the system, if it is desired to bill users directly for use of the system, if individual users have different needs or expectations of the system, and if it is desired to increase the level of interaction between individual users and the system.

The present invention seeks to ameliorate these problems, or at least to provide the public with a useful alternative.

### Disclosure of the invention

It should be noted that certain aspects of this invention find particular application in a media distribution/networking system for use in a multi-user or multi-room environment, or across a local network. Many of the embodiments as described herein (in any aspect or embodiment) are directed to systems within hotels and their installation and use. As used herein the term "hotel" is preferably to be understood as encompassing any form of establishment where guests are temporarily allocated a room or similar or part thereof, whether for payment or not. It should be understood that the embodiments, and the systems, methods and features, described herein are also readily installed and used within other environments, including, in particular ships, particularly cruise ships, aeroplanes, trains, hospitals, multi-dwelling units, for Instance blocks of flats, or condominiums, groups of houses, offices or groups of offices, factories, shops or groups of shops, schools and other work, commercial or educational environments, stations, airports and other transport termini.

This invention is defined by the subject-matter of the independent claims.

### Brief description of the drawings

Figure 1 is a schematic diagram of a media distribution/networking system;
Figure 2 is a more detailed schematic diagram of the media distribution/networking system of Figure 1;
Figure 3 is a more detailed schematic diagram of a variant of the media distribution/networking system of Figure 1;
Figure 4 is a further more detailed schematic diagram of a variant of the media distribution/networking system of Figure 1;
Figure 5 is a block diagram of a server in the systems of Figures 1,2,3, and 4;
Figure 6 is a schematic diagram showing connections between a Hub, a plurality of Head End Servers (HES's) and a plurality of Local Control Units (LCUs);
Figure 7 is a state diagram showing video output session states and transitions between these states in the preferred embodiment;
Figure 8 is a state diagram showing audio output session states and transitions between these states in the preferred embodiment;
Figure 9 is a state diagram showing laptop connectivity session states and transitions between these states in the preferred embodiment;
Figure 10 is a state diagram showing internet on TV session states and transitions between these states in the preferred embodiment;
Figure 11 is a diagram illustrating features of menu and other control screens relating to bookmarking ;
Figure 12 is a schematic diagram showing the interleaving of two video files during transmission over a common channel; and
Figure 13 is a schematic diagram showing the interleaving of four video files during transmission over two separate channels.

### Mode(s) for carrying out the Invention

A high level overview of the system is now provided. This is followed by a more detailed description of communication within the system, including the processing and distribution of data received at a site, particularly as this relates to the installation of software, and the generation of diagnostic information. There then follows description of the tailoring of the system to particular users, and the bookmarking of content by a user. There is then some discussion of the interleaving of data, which is an important feature of the system and which increases its versatility in dealing with a range of different types of data. Finally there is some further description of general capabilities of the system and some description of alternative embodiments.

### 1. Overview of system

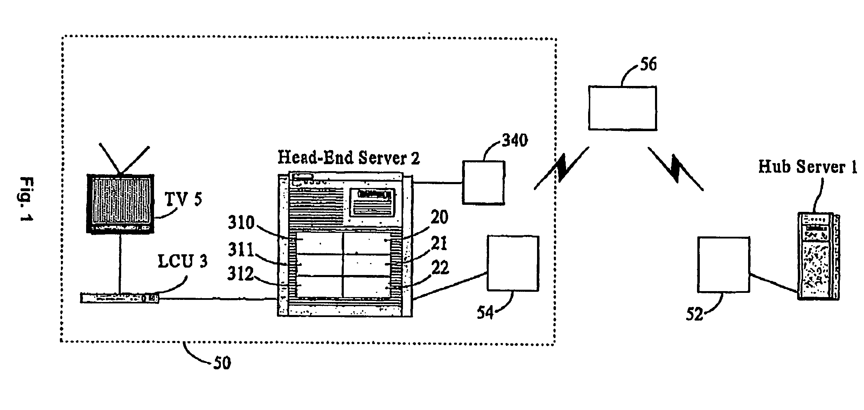

The media distribution/networking system, or data distribution system, shown in Figure 1 supports the reception of data streams from a central hub, including a server 1. The central hub server 1 provides data streams to one or more sites 50 remote from the hub server 1, and the data streams provided to the sites can be tailored to the requirements of the site. In particular, the central hub provides data streams to one or more hotels remote from the hub server 1, and the data streams provided to the hotels can be tailored to the requirements of the hotel.

Although only one site is shown in Figure1, it will be understood that in most cases the hub server 1 delivers data to more than one site.

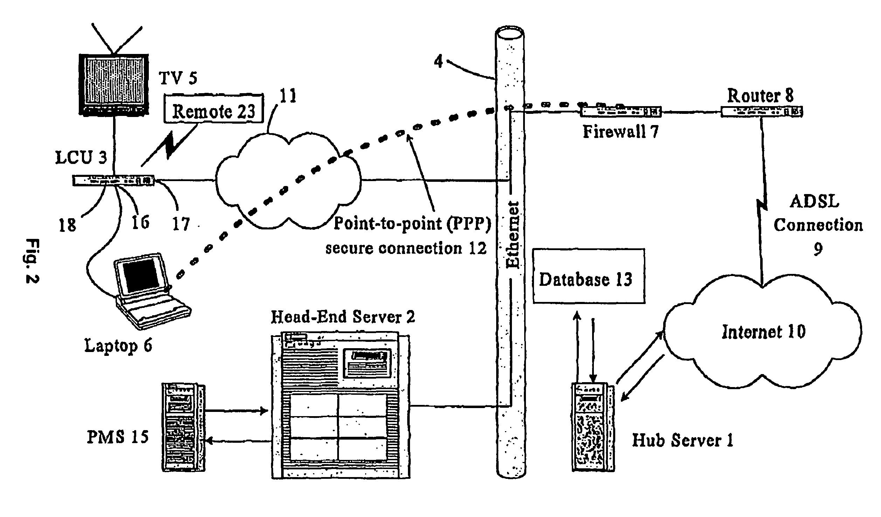

A local distribution sub-system is located at each site. Components of such local distribution sub-system (a local server, referred to as a head end server 2, a Local Control Unit (LCU) 3, and a TV 5) are illustrated in Figure 1. Further components are illustrated in Figures 2 to 4 and discussed in more detail below.

In the preferred embodiment, the data streams are transmitted by a satellite transmitter 52 from the hub and received by a satellite receiver 54 at each site.

Upon receipt at a site, the data streams are processed and stored at a database 340 located within the Head End Server (HES) 2, which controls distribution of data streams to Local Control Units (LCUs) 3 at particular locations, for instance particular rooms, within the site.

In alternative embodiments, the database 340 can be separate from, but linked to, the head end server 2.

The system of Figure 1 is illustrated in more detail in Figure 2. The satellite transmitter 52, the satellite receiver 54, and the satellite 56 are not shown in Figure 2.

In the preferred embodiment a back channel is also provided from the HES at a site to the hub server 1 via an Ethernet network 4, firewall 7, router 8, Asymmetric Digital Subscriber Line (ADSL) 9 and the Internet 10. In alternative embodiments such internet link is used to distribute data streams from the hub to the sites in place of, or as back up to, the satellite link.

Although only a single LCU 3 is shown in Figure 1 and Figure 2, it will be appreciated that in general a large number of LCUs will be connected to each HES. For instance, in a hotel there would typically be a network of LCUs, with one LCU located in each guest room.

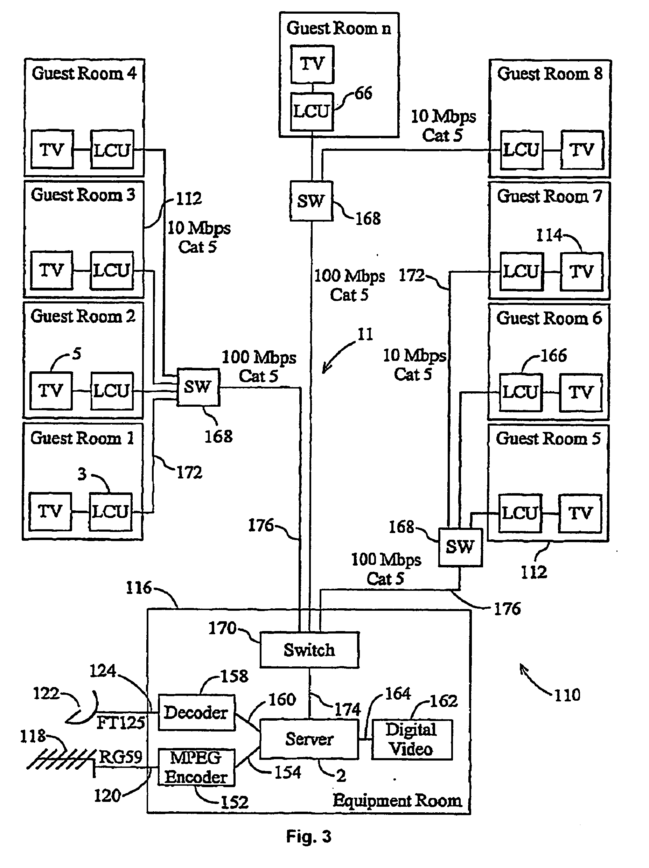

A variant of the preferred embodiment is shown in more detail in Figure 3. The switched point-to-point digital distribution network 11 employs an internet protocol (IP) and in particular the userdatagram protocol (UDP/IP). In an equipment room 116, the downlead 120 from the terrestrial television aerial 118 feeds a receiver and MPEG encoder 152 which provides digital MPEG video streams 154 for the received terrestrial television programmes to a server 2 (although one server 2 has been shown in the drawing, several such servers may be employed). Also, the downlead 124 from the satellite dish 122 feeds a decoder/descrambler 158 which provides digital MPEG video streams 160 for the received satellite television programmes to the server 2. Furthermore, the video replay equipment162 has a digital output and provides digital MPEG video streams 164 for the video programmes to the server 2. The server 2 selects which of the video streams is to be transmitted to which room 112, and places the selected video streams on the digital network 11 using UDP/IP, or TCP/IP, each addressed to the selected room 112. In each room 112, the television 114 is connected to the network 11 by a local control unit (LCU) 3 that receives the video stream addressed to that room 112, decodes it, and supplies the resulting analogue video and audio signals to the television 5. Each LCU 3 is also operable to send requests over the network 138 to the server 2, for example to change the television/video channel supplied to that LCU 3.

The network 11 is designed to support a bandwidth of up to 10 Mbps for communication between the server 2 and each LCU 3. The components required to deliver this bandwidth will vary because of the different topology of each hotel-for example, the layout of floors, risers, and the location of the equipment room 116 in which the server (s) 2 is/are situated. The required bandwidth of 10 Mbps per LCU 3 can be delivered using a switched network built on one or more high speed (100 Mbps) switches 168 each having up to twenty three ports, for instance eleven ports, that are in turn linked to the server (s) 2 (and to each other) via a Gigabit switch or high speed backbone network linking switches 170. Each LCU 3 is connected to the network via such a 100 Mbps switch 168and a Category 5 (ANSI/EIA/TIA-568-1991) unshielded twisted pair (UTP) cabling system 172 operating at up to 10 Mbps. Each switch 168 is connected to the backbone 174 using such a Gigabit switch 70 and a Category 5 UTP cabling system 176 operating at up to 100 Mbps. The server (s) 2is/are connected directly to the Gigabit switch 170.

This architecture can be simplified for smaller installations that do not have high bandwidth requirements, by using 10/100 Mbps switches with fewer ports, and by using a lower speed cabling system for the backbone network.

Connections between the HES 2 and LCUs 3 may be established, in various embodiments, via cabling, in particular Category 3, Category 5, telephone, or coaxial cabling, microwave or other electromagnetic wave linkage, satellite transmission, bluetooth, and combinations of these media. In certain environments, for instance within trains, connection between the HES 2 and LCUs 3 may be established by means of radio links rather than, or in particular embodiments in conjunction with, cabling.

In the preferred embodiment data is transmitted between the HES and an LCU using User Datagram Protocol (UDP/IP). In alternative embodiments other communication protocols are used, particularly other point to point communication protocols.

Each LCU is connected to at least one device, usually at least a television 5 or other display device. The LCU is also adapted to receive user input from a remote control unit 23. A user may thus control operation of a device attached to the LCU, or may communicate with the HES, for instance in order to request particular data or content.

The HES compares the data request with control criterion, to determine for instance whether the requested data is available, and whether the user is allowed to access that data.

The LCU mediates communication between the HES and devices connected to the LCU.

In the preferred embodiment, the HES receives a variety of data, including audio/visual data either from the Hub or from some other source such as the internet or terrestrial television or radio broadcasts, and distributes this data to LCUs. The LCUs generally output such received data to an associated device, for instance a television.

An LCU processes some such received data before outputting the data to an associated device. For instance, in the preferred embodiment the data transmitted between the HES and an LCU is digital data, and any digital audiovisual data transmitted between the HES and LCU would typically be converted to analogue audiovisual data before being output to a television associated with the LCU.

In the preferred embodiment, the HES also transmits control and information messages to LCUs. Such messages, for instance EPGs, may be generated by the HES.

### 1.1 LCU

In the preferred embodiment, with reference to Figure 2, each LCU 3 has a main Ethernet port 17 and communicates with the HES 2 via a communication path 11 and Ethernet network 4. Each LCU 3 also has a guest Ethernet port 16 and serial port 18 which enable a guest to plug in their laptop 6. In Figure 1, for illustrative purposes the laptop 6 is shown connected to the guest Ethernet port 16. Each LCU 3 is connected to a respective television set 5. The laptop 6 communicates with the firewall 7 via a point-to-point (PPP) secure connection 12. For the avoidance of doubt, the point to point secure connection 12 shown in Figure 1 does not represent a direct physical connection between the laptop and the firewall; rather this point to point secure connection is established via the LCU 3 and the communication path 11. A remote control unit 23 provides user input commands to the LCU 3.

Two network interfaces are provided within the LCU 3: one to communicate with the Head-End Server (HES) 2 and one for the guest to plug-in their laptop 6. The network connection between the LCU and the HES is via a 10Base-T Ethernet network 4 that runs at 10Mbps using an RJ-45 connector, into which a Cat-5 twisted pair cable is connected. Two different methods are provided to allow a guest to access the Internet via the hotel's "high speed" Internet gateway; a serial port 18 and a 10Base-T Ethernet port 16.

The 10Base-T port 16 runs at 10Mbps and the laptop is connected using a Cat-5 cable plugged into an RJ-45 port on the TelePort. The port is wired up as per a hub, so that cross over cables are not needed.

The serial port 18 is a 9-way female D-type connector, which supports a connection speed of 115. 2Kbps.

The laptop 6 connects to the system using a TCP/IP protocol (over either IEEE 802.3 Ethernet for the 10BaseT connection 16 or PPP for the serial port 18).

### 1.2 Head-End Server

Although the HES 2 is illustrated in Figure 1 and Figure 2 as a single server, it will be understood that the HES 2 is a logical server that may be installed as one or more physical servers depending, for instance, on the number of LCUs 3 to be serviced, which in tum may be dependent, for instance, upon on the number of rooms in a hotel.

Within the HES are various server applications, including an Access Manager 21, a Billing Manager 22, a Gateway server 20, an Upgrade Manager310, a Media Manager 311, and a Communications Manager 312, and a Configuration Manager 176.

The Access Manager 21 controls all of the services offered by the system, including access control permissions to services for each guest. The Billing Manager 22 controls all aspects of billing for the services used by guests. The Gateway Server 20 controls and monitors each connection between a laptop attached to the LCU and the firewall that connects the hotel to the Internet via the ADSL connection. The Gateway Server also passes connection and usage based data to the Billing Manager for processing.

The Gateway Server ensures that packets are routed securely to their inbound or outbound destination, manages the sessions, including initiation and termination, and monitors traffic flows and collect statistics.

The HES 2 is coupled to a Property Management System 15.

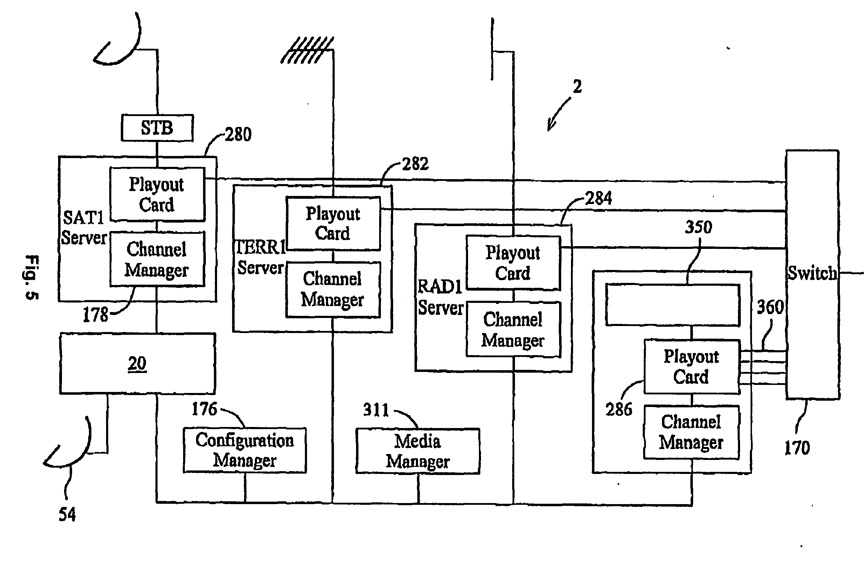

The HES 2 will now be described in more detail, with reference to Figure 5.

The HES 2 processes input streams in a variety of formats (analogue, digital, compressed, encrypted, etc.) and outputs digital streams in MPEG-2 format to the switch 170 that supports Internet Group Management Protocol (IGMP). A channel controller uses IGMP to allow LCUs 3 to subscribe to any of the shared stream-based media services. The UDP/IP transport protocol is used for transmitting MPEG-2 streams to the LCU 3.

The HES 2 comprises media capture, compression, and streaming functions and includes a media manager 311 that handles media-related events. The media manager 311 collects channel and schedule information from a configuration manager 176 and then passes messages to a specific channel manager 178. These messages detail actions that need to be taken; for example, loading an asset file, or streaming an asset on a particular card/channel. The configuration manager 176.holds a central repository of system-wide information. This data is used to control many aspects of a particular installation. A subset of the configuration manager database holds information specific to the HES 2. This identifies the various servers, the cards that are registered, the channels that have been assigned, the loaded media assets and the overall schedule.

The server may also include the following components: television and radio cards 280,282,284 that receive analogue RF and satellite signals and convert them to digital signals in MPEG-2 format; television and radio cards that receive digital signals in MPEG-2 format; playout cards 286 that multicast an MPEG-2 or MP3 file over the hotel network; and the software for the HES 2, e. g. the channel manager 178, streaming components, etc. The HES 2 may, for example, be presented as an8 unit rack for mounting in a "19 inch" cabinet. Inside the cabinet there are a motherboard (e. g. Intel700MHz processor, 256MB RAM, and 18GB disk), a PCI bus with 24 slots for the media cards, a 100 Mbps network card, power supply and fan. The HES uses a DHCP client to request IP addresses for each card installed, and an SNMP client that will report any change in the status of the cards to an SNMP server in the channel controller. Each media card 280-284 installed in the HES 2 is connected to the IGMP switch 170 by a Category 5 fly lead to a port on the switch 170. If more than one HES 2 is provided, each HES 2 is connected to a hub, so they can communicate with other devices on the network. The switch 170 is connected to the network via its up-link port. The switch supports IGMP and runs at 100 Mbps. The number of ports on the switch 170 and the number of switches will depend on each installation.

The HES comprise at least one hard disc 350 on which data available for distribution is stored. The database 340 is located at or across the or each hard disc 350 or, in alternative embodiments, the database is located on a separate storage medium, such as another hard disc, in which case the or each hard disc 350 contains a copy of at least some of the data stored in the database.

### 1.3 Firewall

In the preferred embodiment, a firewall 7 is provided. The ability to route all Laptop Connectivity sessions to the Internet through one IP address reduces costs and increases security.

### 1.4 Hub

The hub comprises a storage means in the form of a database 13 installed in a memory, and at least one processor included within a hub server 1.

Content and related information, including films, music, software and software upgrades, still images, EPGs or information relating to EPGs, games and applications is stored in a database 13 connected to the hub server 1. Distribution of content to sites is controlled by the hub server 1.

Information relating to content, usage of content and distribution is received, stored, and processed at the hub, and sent to sites as appropriate. In particular, the databases 13 connected to the hub server 1 store information relating to content and content files and EPGs, such as title, status, digitisation status, ordering information, preparation information, licence information, running time, category, file size, filename, artist, genre, core album status, language, file id, file status, supplier, quality control status. Such information can be modified by the hub server 1.

Other Information stored in the database 13 includes site or hotel details, including location, id, city, telephone number, system details, configuration files, pricing, and update details.

The hub server manages the distribution of data stored in the database to sites, for instance hotels. The data is sent, via a dedicated leased line, to a satellite communication provider, which is responsible for transmission of the data from the satellite transmitter 52, and reception of the data at the satellite receiver 54.

A processing means, in the form of a processor at the hub server is responsible for preparing data for, distribution to sites. As discussed in more detail below, in particular in connection with the Upgrade Manager, particular sets of data are linked by XML header files which describe the content and correlation of the sets of data. The XML header files also provide instructions for how data is to be processed and/or stored upon receipt at a site.

Links between the hub server 1 and hotels or other sites enable information concerning content usage and other information to be transferred between the hub server 1 and the hotels or other sites. Such information includes content available at particular hotels or other sites, total and available storage capacity, information relating to available content, channel information, and usage information, either aggregate or individual, for instance on a per room, per stay, per guest, per hotel, or per time period basis. Such data is stored and processed by the hub server 1 and databases 13.

Indeed, as discussed in more detail below, any data relating to the system, or usage of the system, can be transmitted from components of the system to the head end server, stored at a database at the head end server and subsequently transmitted to the hub server. The hub server can thus monitor any aspect of the system.

A back channel is provided between any component of the system at any site and the hub server. The hub server is also able to distribute any piece of data, including software, to any component of the system at any site. However, as discussed in more detail below, the distribution of content is controlled locally in the preferred embodiment.

In one implementation of the preferred embodiment, the data streams are sent via a satellite link to the HES 2, and files are extracted from the data streams at the HES 2 if the files are directed to that hotel.

The list of hotels or other sites to which a data stream is directed is included in an XML file sent with data to the satellite communication provider. It is the responsibility of the satellite communication provider to construct the data streams from the data sent from the Hub.

The data streams include video and audio programmes, screen shots, electronic programme guides, executable files, requests for information, commands, applications and application updates.

In particular the data streams include data upgrades including software upgrades, and the upgrades are executed automatically at the server upon receipt of files from the data streams.

### 1.5 Laptop Connectivity

The laptop connectivity function enables a guest to connect a PC to the Internet by connecting into the guest Ethernet port of the LCU unit. Traffic is routed through the system network to an external firewall and the Internet beyond.

The guest achieves access to the Internet with a minimum of fuss. The following is assumed:
- The guest laptop has a generally reliable 10BaseT-capable Ethernet interface
- The guest laptop has a generally reliable TCP/IP network stack.
- If the guest laptop has a static IP address defined, it also has a gateway and Domain Name service (DNS) server setting defined.

The LCU offers the following to the laptop:
- A DHCP server issues an IP address, gateway and DNS server to a laptop which has a DHCP client
- IP address faking to a laptop with static IP address. This allows the laptop traffic to pass through the network with a valid routable IP address.
- DNS request redirection to the local DNS server for when the laptop has a fixed setting.
- Acts as a gateway when the laptop expects a gateway to exist.

The HES passes IP addresses for the second interface of the LCU and for the laptop at the time it asks to activate the laptop interface.

Most of the initialisatlon is actually done when the head-end server calls a start Laptop Connection RJ45 function for the first time.

A function is invoked to attach a TCP/IP stack to the LCU's guest Ethernet port.

The IP address assigned to the laptop is added to the LCU's host table.

Finally a function is called to launch a DHCP server on the guest Ethernet port. This server is configured to provide only one address-that which is assigned to the laptop. It is also set up to provide the address of a DNS server (currently the same one offered to the LCU by the head-end server in its own DHCP service) and to set the default gateway of the laptop to be the LCU itself.

The HES will have provided an IP address for the LCU's guest Ethernet port, an IP address to assign to the laptop and a netmask which describes the two addresses as being on the same subnet while providing differentiation from the IP address of the main network port.

This degree of setup is sufficient for supporting a laptop with a DHCP client. It broadcasts a request for a DHCP server to the LCU's guest port- the LCU responds with the assigned IP address, DNS server setting and itself as the default gateway. Traffic from the laptop arrives at the LCU which then routes it out its own default gateway provided by the HES. Traffic arriving at the LCU for the laptop is routed through to the guest port using normal routing procedures.

### 1.6 Internet on TV

In the preferred embodiment, Internet on TV sessions are hosted by a Windows 2000 server running Citrix Terminal Services.

A Citrix session manager installed on the Windows2000 Citrix Terminal Server monitors logged on Citrix sessions and notifies the Gateway Manager when a session closes. The Service can accept a request to logoff a named user session.

A custom Internet Explorer is used for Internet on TV. It communicates with the Gateway Manager stream socket server using XML to request user & tariff details, notify application exit and subscription timeout. All required parameters are sent by the Gateway Manager to the LCU in the request to start the Citrix client.

Genbrowse is installed on the Windows 2000 Citrix terminal server and is available to all users.

### 2. Communication within the system

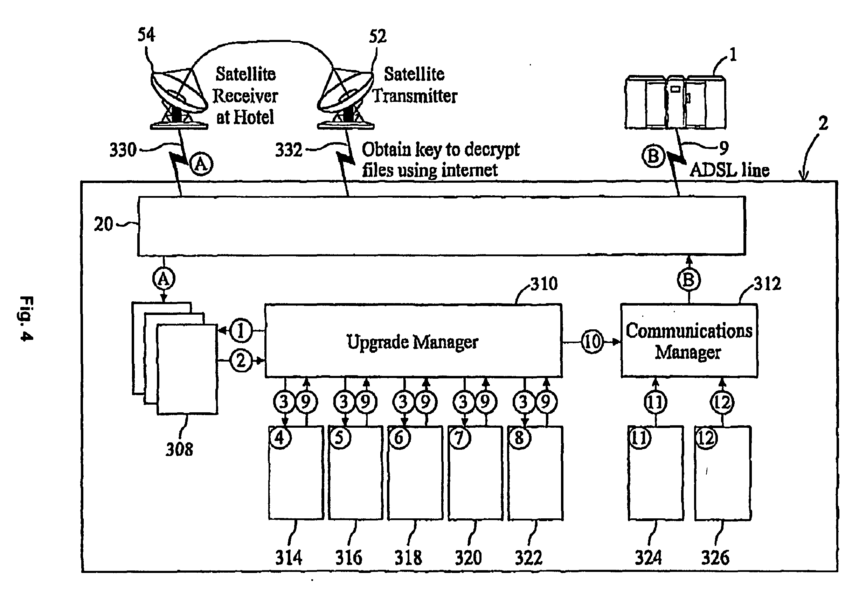

There is now provided a high level overview of the communications that take place between the hub server1, hosted at headquarters, the HES 2 installed at each hotel, and LCUs. The overview clarifies the role of each server and the core services that support communications. Figure 4 illustrates the architecture and core services referenced in the overview.

Aspects of the HES relating to the selection, storage and redistribution of content and of other data, particularly software are described in detail. These aspects of the HES include the Gateway Server 20, which provides a connection between the HES and the outside world, the Upgrade Manager which handles incoming data, and which is responsible for high level management of the upgrading, updating, or loading of content or other types of data, and the Communications Manager which handles outgoing data, and which is responsible for monitoring and communicating diagnostic data, and data relating to system usage or events.

Particular attention is paid to the types of data which are sent between the Hub, the HES, and LCUs and how this data is stored and processed, and to the distribution and installation of software, the generation and distribution of diagnostic information relating to various devices within the system, and the distribution, storage and analysis of information relating to user preferences and actions at the HES and at the Hub.

There then follows description relating more closely to the control of distribution of data to a user, and the interaction of a user with the system, particularly the bookmarking of content or other types of data, and the billing of a user.

Finally, features of the system relating to the distribution of different types of content or data to a user and the output of this content or data by various output devices are described.

### 2.1 Gateway Server

The Gateway Server 20 as illustrated in Figures 1,4 and 5 provides a single point of access between the outside world and the system. The Gateway Server is fitted with a RAID-5 disk system so that large files can be stored securely so that disk failure will not necessitate retransmission of files. The Gateway Server comprises two core components.

The primary mechanism for loading data onto installations, for instance across Europe, is the satellite receiver 54 and down-link 330. The down-link is an always open connection running at 2 Mbps, and is a fully managed service.

Files transferred via the down-link are encrypted prior to transmission from satellite transmitter 52 and are tagged so that the receiving software can determine whether the files should be loaded or ignored. Receiving software decrypts the incoming stream and determines whether the file should be loaded onto the HES 2. The streams processed by the software are written to files and directories named in the stream header.

The Gateway Server 20 supports a communication mechanism between the HES 2 and the hub server 1, and manages the physical details of the connection to the Hub server so that a variety of different communication options can be supported without having to reconfigure the internal applications. The Gateway Server also handles the buffering of messages to be sent to the hub server 1 in the event of the connection failing.

Each hotel is provided with a 1 Mbps ADSL connection 9 installed and managed by a variety of national telecommunication providers. However, in variants of the preferred embodiment the Gateway Server supports leased line, ISDN or POTS modem connections.

### 2. 2 Stream Management Services

While the Gateway Server 20 acts as a communications bridge between the HES and the
Hub server, there are two core services that are responsible for routing, managing and processing the streams and files being transmitted between the HES and the Hub server.

These services are referred to as the Upgrade Manager310, which handles incoming data, and the Communications Manager 312, which handles outgoing data.

The characteristics of input streams and operation of the Upgrade Manager, and the characteristics of output streams and operation of the Communications Manager are now discussed.

### 2.3 Input Streams

The primary path for data that is to be loaded onto the system is through the satellite link 330. The satellite link has a managed, always open, downstream bandwidth of 2 Mbps. The HES software uses the Internet (via the ADSL line 9) to request a key to decrypt the incoming assets, and also to request that damaged packets are retransmitted.

The following data are transferred from the hub server 1 to the HES 2 via the satellite link 330:
- Media Assets 314; video and audio files in MPEG-2 format, and EPGs.
- Application Releases; the boot image file for the LCU, object and executable files for each HES application, executable files containing DDL and DML commands for upgrading the database at the HES.
- Configuration Information 320; files holding configuration data for applications, and DML scripts for loading configuration information into the database
- User Interface Assets 322; Java Server pages, image and graphics files, and Java archive files that define and control the "look and feel" of the user interface.

As discussed in more detail below, such data is usually transmitted with an XML header file which defines the content and correlation of component parts of the data, and this XML header file defines how the data is processed upon receipt at the head end server.

### 2.4 Operation of the Upgrade Manager

The Upgrade Manager310 provides a framework within which the transactions described below can be processed. The XML schema are defined for each class of input and output file referenced below.

The Upgrade Manager310 monitors files being downloaded by software into the work area 308. This monitoring is performed via link 201.

When a complete file is downloaded into the work area 308, the content of the file is determined from the file name. For example, a suffix of ".sw" may indicate a zip file containing a software release. The advantage of this approach is that a single file encapsulates all component parts of the release, which may include an XML file, or an XML or other header, defining the content of the release, application object and executable files, an install program, help and support documentation.

In the case of a file containing a software release, the XML file or header defines the relationship between the component parts of the release, and may also include an identifier identifying in which component of the system the software is to be installed, and when the software is to be installed. In variants of the preferred embodiment, the HES analyses the XML file or header and the content of the release and decides itself to which component of the system the software should be directed. Software releases can be directed to any part of the system, including the HES itself and LCUs.

In an alternative implementation, an XML file is downloaded which informs the Upgrade Manager of the name and content of a subsequent download file to be downloaded. This is more elegant and flexible, but requires slightly greater complexity within the Upgrade Manager, as the content file may not necessarily be the next file downloaded and indeed may never be downloaded, so the Upgrade Manager has to check and report errors back to the HES and then tidy up any orphaned XML files.

Once the Upgrade Manager 310 has determined the content of the file (s) that have been downloaded, the Upgrade Manager spawns a child content management process314-322 to manipulate the files. Decoupling the processing of the files from the Upgrade Manager leaves the Upgrade Manager process as a framework within which a diverse collection of content processors can be supported.

### 2.4.1 Media Assets

This class of download files comprises a suite of large files, with an XML header file that defines that content and correlation of the files within the collection. A typical video asset will be shipped as eight 500 Mb files containing the film, and an EPG which could potentially be a series of other MPEG, JPEG and text files. An audio file could be shipped as a single 5 Mb file with an EPG in the case of a single, whereas a CD would be shipped as a collection of 5 Mb files and an EPG.

With reference to Figure 4, the content management process 314 copies the files as a collection from the work area 308 to the Media Manager, and runs the installation program to update the register of media assets held on the LCU.

### 2.4.2 LCU boot image

Much of the software at an LCU is not permanently installed, but rather is installed each time an LCU is booted up, whereupon a boot image file is loaded to the LCU. The boot image file contains the software and other data required by the LCU.

Updating of software at the LCU in the preferred embodiment therefore comprises transmitting a new boot image file from the Hub to an HES, and subsequently transmitting the boot image file to the LCU.

The LCU boot image is a single executable file which is shipped with an XML file that defines when the upgrade is to be applied. With reference to Figure 4, the content management process 316 copies the boot image file to the specified directory on the HES and adds an entry onto the Scheduler with instructions on when the LCUs are to be rebooted.

In alternative embodiments, particular software at an LCU is installed without rebooting the LCU and without re-installing other software at the LCU. In these alternative embodiments, the software is transmitted from the HES, interleaved with content or other data as necessary so that operation of the LCU is not interrupted. The software is stored locally at the LCU until the most appropriate moment for the software to be installed, in order to provide minimal disruption to the service provided to a user.

### 2. 4. 3 HES applications

In the preferred embodiment, all upgrades to HES applications are applied through formal installation programs. An upgrade is packaged as a single download file which is a zipped file containing all of the files required to perform the upgrade successfully. The installation program is responsible for loading new object code and executables as well as applying changes to database schema and content through DDL and DML scripts. The installation program is able to manage the rollback of the installation in the event of a failure to install one or more components.

With reference to Figure 4, the content management process 318 copies the upgrade file to the specified directory on the HES and adds an entry onto the Scheduler with instructions on when the upgrade is to be applied, along with the name of the program to be run to install the files.

### 2.4.4 Configuration information

In the preferred embodiment, all changes to configuration information held within the system are applied through formal installation programs. An upgrade is packaged as a single download file which is a zipped file containing all of the files required to perform the upgrade successfully. The installation program is responsible for replacing existing configuration files and applying changes to database content through DML scripts. The installation program is able to manage the rollback of the installation in the event of a failure to install one or more components.

With reference to Figure 4, the content management process 320 copies the upgrade file to the specified directory on the HES and add an entry onto the Scheduler with instructions on when the upgrade is to be applied, along with the name of the program to be run to install the files.

### 2.4.5 User interface assets

This class of download files is a collection of Java Server pages, image and graphics files, and Java archive files that define and control the "look and feel" of the user interface. An XML header file defines the content and correlation of the files within the collection. The upgrade is packaged as a single download file which is a zipped file containing all of the files required to perform the upgrade successfully.

With reference to Figure 4, the content management process 322 copies the upgrade file to the specified directory on the HES and adds an entry onto the Scheduler with instructions on when the upgrade is to be applied, along with the name of the program to be run to install the files.

It is the responsibility of each content management process 314-322 to notify the Upgrade Manager 310 of its status during execution and report the completion status to the Upgrade Manager upon termination.

The Upgrade Manager 310 reports the status of the content management processes back to the hub server 1, via a Communications Manager 312. In the event of failure to install the files or assets, the decision on the remedial action to be taken is made at the hub server 1.

### 2.5 Output Streams

The Communications Manager, as discussed in more detail below, is responsible for the communication of data from the head end server to the hub server. The Communications Manager is linked to a database 340, in which data to be sent to the hub server is stored. In the preferred embodiment, the database 340 is also used to store data received from the hub server. Connections between other components of the head end server, for instance the upgrade manager 310, and in particular the content management processes 314 to 322, and the database 340, in the preferred embodiment, are not shown in Figure 4.

The primary path for data to be transferred from the HES 2 to the hub server 1 is through a Virtual Private Network (VPN). The link between the VPN and each hotel is the 1 Mbps ADSL connection 9. The following data are transferred from the HES to the hub server through the VPN:
- Confirmation of receipt of file (s) received through the satellite link 330
- Notification of the Hub server of the status of the installation of the file (s)
- Diagnostic information. The HES can transmit diagnostic information to the hub server instantly (e. g. Simple Network Management Protocol (SNMP) traps)
- Event Log data
- Usage data.

The data are typically stored at a database at the head end server, and are transmitted to the hub server as desired. Data is usually transmitted to the hub server periodically, for instance once per day, although as mentioned above some data is sent instantly.

In the preferred embodiment, priority data is associated with data which are to be transmitted to the hub server, and transmission to the hub server is dependent upon this priority data.

For instance, certain usage data, such as a record of all user keystrokes over a certain period of time as discussed below, has a low priority and is thus transmitted to the hub server once per day. Other data, such as diagnostic information reporting errors at components of the system has associated priority data which is variable and represents the importance of the data. For instance, a serious error which causes the system to crash would result in the transmission to the HES of diagnostic information which would have a very high priority. The HES transmits such data to the hub server instantly.

Other data, such as date, time, a user identifier, or a system component identifier, are optionally associated with data sent from the HES to the hub server.

In the preferred embodiment, the system can be configured to store at a database at the HES, and to transmit to the hub server, any data which can be produced by any component of the local distribution sub-system.

An XML file is generated by the HES which identifies the content and correlation of components of data sent from the HES to the hub.

The particular data which is stored at the HES, the rules which are applied to determine priority data, and the rules applied to control transmission of data to the hub server are determined by an application running at the HES. This application and the parameters it applies to determine these matters can be altered by a user at the site, or can be altered by the transmission of an upgrade or amendment to the application transmitted from the hub server.

### 2.6 Operation of the Communications Manager

The Communications Manager 312 provides a framework within which the transactions described below can be processed. The XML schema are defined for each class of Input and output file referenced below.

### 2.6.1 Diagnostics

With reference to Figure 4, the Communications Manager 312 within the HES is able to transmit diagnostic information from any component at the hotel to the hub server whenever required. This information is used to notify a Management Console (not shown) at the hub server of an issue that needs to be addressed expediently, so installations can be managed pro-actively.

The Management Console outputs data to a user at the hub, via a display screen, and the user can monitor performance of the system at a particular site or across a plurality of sites.

The Management Console is also able to send messages automatically. For instance, if the Management Console receives data representing a serious error at a particular site, it may automatically send an e-mail message to a responsible person at that site, and raise an alarm at the site and at the hub.

In the preferred embodiment; the Management Console also instructs the sending the data to a particular site in response to the receipt of particular data from that site. In one example, the Management Console instructs the re-sending of the data in response to the receipt of data from a site indicating that data transmitted to a site has not been received correctly. In a further example, the Management Console instructs the sending and installation of a piece of software to a site in response to the receipt of data from a site that a corresponding piece of software at the site is malfunctioning.

Each component that is enabled for sending out diagnostic information either formats the data using SNMP protocol or sends the data as XML files. The data is sent to an Event
Monitor 324, which then forwards the files to the Communications Manager for subsequent transmission to the hub server 1.

As discussed above, priority data is associated with diagnostic information, and transmission of the diagnostic information to the hub server is dependent upon this priority data.

The diagnostic information can be related to any aspect of the system. For instance, particular diagnostic information relates to the success or otherwise of the downloading and installation of software releases or other data as discussed herein. Such downloading and installation is also be initiated in dependence upon diagnostic information. Particular diagnostic information is also generated in response to tests requested by the Hub, or by an HES.

Diagnostic information includes error messages generated by components of the system.

For instance, if a Billing Manager (responsible for billing of guests at a hotel) within the HES is not able to communicate with the Property Management System (PMS) 15 shown in Figure 2, the Billing Manager generates an error message which is sent to the Event Monitor which assigns it a high priority and forwards it to the Communications Manager, which sends data immediately to the Management Console at the hub server.

### 2.6.2 Event logs and usage data

On a scheduled basis, an Archive Manager 326 gathers all usage data, audit trails and event logs and sends them to the hub server using the Communications Manager. All data passed to the hub server are formatted as XML documents.

### 2.7 Usage data

There follows more detailed discussion of some of the usage data which is monitored, stored and processed at the HES and the Hub, and which was mentioned above in connection with the Communications Manager.

in the preferred embodiment, such usage data includes data relating to viewing of particular pieces of content, for instance films or programmes available on a video on demand basis, or of scheduled services or of publicly available channels, or of distribution of particular music tracks, albums or packages, and further includes data relating to internet access. Such data is variously maintained on a per room, per user, or per time period basis.

It is particularly useful to maintain such data on a per user basis, and in the preferred embodiment, this and indeed a range of other user related data is maintained.

In particular, in the preferred embodiment, all instructions are recorded at the HES 2. These instructions include, in particular, all instructions communicated by a user in the user's room, for example, and most specifically, those to or via the LCU 3and/or the television 5, as sent by the remote 23and/or a keypad/keyboard (not shown). In specific implementations of this further embodiment these instructions include (or also include) instructions sent by the hub server 1 to the HES 2 and instructions sent by the HES 2 to the LCUs 3.

The record of instructions is correlated or associated with data stored at, or accessible by, the HES and, in particular embodiments, the central hub server 1. The system enables a record to be built up of a particular user's preferences and history of use. The record for a particular user is accessible by servers at different hotels and, upon the arrival of a user at a particular hotel where the system is installed, the set up of the system in the user's room can be tailored in dependence upon the user's record.

The records of instructions are correlated or associated with, in particular embodiments for instance, a particular user's identity, the company for which a particular user works, times and dates of use, the identity of particular hotels or installations, the characteristics of a particular room, pricing and payment information, with responsiveness to marketing or sales information, with internet usage, or with usage of hotel facilities.

The records of instructions are sent to the Hub server, where analysis of the record of instructions is carried out and the user's profile is created or updated. A user profile is downloaded by a particular HES upon arrival of a user at a particular site, and is retained by that HES on a temporary basis. The user profiles are maintained on a permanent basis at the Hub server. In alternative embodiments, user profiles are maintained, and analysis is carried out on a distributed basis across the Hub server and all HES's across the system.

A variety of statistical analysis techniques, including averages, correlations, and time series analysis, are applied to records of instructions and to user profiles at the Hub. These techniques can be applied, for instance, on a per user, per site, per company, or per time period basis. Results of such statistical analysis can be generated on receipt of request from a particular HES. In alternative embodiments, such statistical analysis is performed by individual HES's themselves.

In the preferred embodiment, the user's identity is notified to the system upon check in, although in alternative embodiments the user's identity is notified to the system by entry of a PIN number by a user with a remote control unit in the user's room. The PIN is sent via the LCU to the HES.

The set up of the system in a user's room is tailored in dependence upon the user's record. Primarily, the menu screens displayed to the user, the content and other data which is most readily made available to the user, and the billing options presented to a user are tailored in dependence upon the user's record. However, where the user's record includes a record of actions or preferences with respect to environmental or other parameters, for instance room temperature or lighting level, such environmental or other parameters can be tailored in dependence upon the user's record.

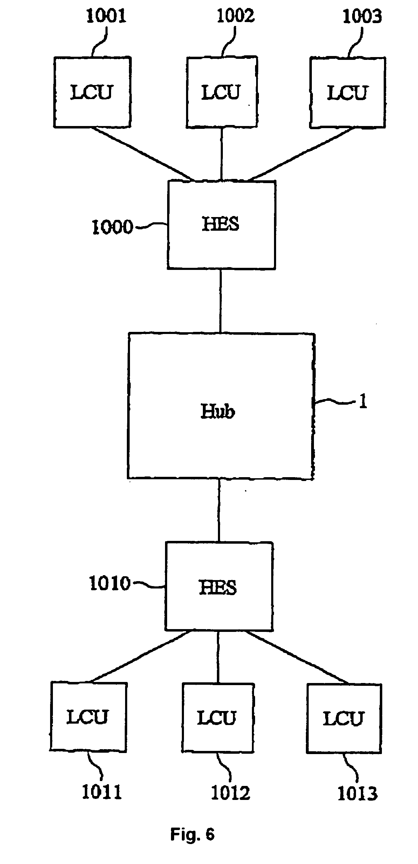

A worked example of recording instructions is given below with reference to Figure 6.

A user visits a hotel with HES 1000 and LCUs 1001-1003. The user inputs various instructions to the LCU in their room, for example LCU1001. The instructions are recorded by HES 1000 and used to compile a profile for that particular user. After the user checks out, the HES 1000 transmits the profile to hub server 1.

At a later time, the user checks into a different hotel with HES 1010 and LCUs 1011-1013. The user inputs certain personal details which are transmitted to hub server1. These details enable the hub server 1 to retrieve the profile associated with that particular user. The retrieved profile is downloaded to HES1010 and used to tailor the system.

For instance, the particular data presented to a user, and menus of data, are varied in dependence upon the retrieved profile.

In the preferred embodiment, the user profile is stored at the HES throughout the user's stay, and is deleted when the user checks out, or when the user has not used the system for a predetermined period of time. The user profile stored at the HES is also updated periodically, usually by downloading an updated version from the hub, if the user stays at a hotel for a long period of time.

User instructions can be recorded from a number of different LCUs during a user's stay, if a user identifier is obtained each time the user uses a different LCU.

In alternative embodiments, the user does not need to input personal details into the system himself, but rather the details are taken from data given by the user upon checking in, or for instance from their credit card data or loyalty card data.

Whilst the above examples have been directed specifically to embodiments within hotels, the features recited in these examples are also found in embodiments in a range of other environments, for instance those environments discussed in more detail later below.

### 2.8 Use of XML and examples of communication within the system

XML is used throughout the preferred embodiment of the system as it provides a framework within which data types and relationships between those data types can be defined, providing a versatile and powerful framework for distributing and processing related pieces of data or data types. It also provides a highly portable format as any device which is XML enabled can parse an XML file or header. Other languages or protocols which provide similar features can be used in alternative embodiments.

XML enables the creation and formatting of a document, page, or file structure and the definition of rules for processing such document, page, or file. Tags can be created for different types of data within the document, page or file and relationships between the data types can be defined.

A particular XML file is parsed using an XML processor and according to a particular XML Schema or Document Type Definition (DTD). In the preferred embodiment, the XML processor is linked to various applications which process the data following parsing.

Data is sent between components of the system, for instance between LCUs and the HES, between components of the HES, and between the HES and the hub server in XML format, or with an XML header.

Files in XML format or XML headers are also generated by components of the system, for instance the Communications Manager 312, the Upgrade Manager 310, the Content Management Processes 314 to 322, the Gateway server 20, the Hub Server1, the Management Console, the LCUs 3, the Event Monitor 324, and the Archive Manager 326.

An example of the distribution of data from the hub server to a component of the local distribution sub-system, and the distribution of data from the component of the local distribution sub-system to the hub, in the preferred embodiment, is now considered.

A data file is sent in XML format from the hub server 1 to the satellite communications provider, with an XML header file which defines to which sites the data file is to be distributed. The XML file is parsed by the satellite communications provider, the data file is included in a transport stream which is addressed in dependence upon the information in the XML header and the transport stream is transmitted from the satellite transmitter 52 to satellite receivers 54 at the sites.

Processing of the data file at a site to which the data stream is addressed is now considered. The data file is passed to the Upgrade Manager310 by the Gateway server 20. The data file is parsed by the Upgrade Manager, and an XML tag identifies the file as containing media assets.

A content management process 314 is started and other XML tags identify the content, location and correlation of MPEG files containing film data and the content, location, and correlation of description of content files within the data file.

As discussed above, the content management process 314 copies the files to particular locations within the database 340.

A request for data is then sent from an LCU 3 to the HES 2. The LCU sends this request as an XML file which is parsed at the HES. The parsed request is then passed to the appropriate application within the HES. In response, a data file is generated containing data from the description of content data which was earlier stored in the database 340, and containing display information. An XML header file is generated which defines the content and correlation of the description of content data and display data. The data file and the XML header file are transmitted to the LCU which parses the XML header file, and passes the content of the data file to appropriate processes in the LCU. Data is then displayed on the TV 5.

A user selects further data in dependence upon the data that is displayed, and a request for data is sent from the LCU to the HES, as an XML file, which is then parsed at the HES. The parsed request is passed to the appropriate application within the HES, and in response MPEG data, which was stored earlier in the database 340, is streamed to the LCU. In the preferred embodiment an XML header is sent with the MPEG stream, which is parsed and which provides information concerning the MPEG stream.

Throughout the processes described in the example above, data representing each key press made by a user is also sent from the LCU to the HES, and is stored in the database 340. Similar user input data is also sent from other LCUs within the local distribution sub-system and is also stored in the database 340. In this example, associated data is stored with the key press data, namely the time and date the key press was made, a component identifier which identifies from which LCU the key press data was sent, data representing the data displayed on the TV 5 when the key press was made, and data representing other processes being performed by the LCU at the time the key press was made.

Once per day, all such user input data, and non-urgent diagnostic or other data, is sent from the HES to the Hub via the connection 9. The data is sent as an XML file, with XML tags defining the content and correlation of the data within the file. Upon receipt at the hub server, the XML portion of the file is parsed and the data is passed to the appropriate applications and stored or processed as required.

The key stroke data is stored in a memory at the hub, and a processor is used to analyse the key stroke data and other similar data which was received and stored earlier from the site discussed in the present example, and from other sites. In the present example, the analysis has the aim of determining the efficiency of particular menu screens; by analysing how a user navigates through a menu, for instance determining how many times a particular menu screen is returned to, and for how long a user views a particular menu screen, it can be determined how easy to understand or how confusing a menu screen is.

Typically, the recording of key stroke data, as described in the example above, only takes place for a limited period of time, or at a limited number of sites, and particular studies and analysis of aspects of the performance of the system have a pre-determined duration.

Instructions are sent from the hub to HESs to be used in such studies to define which data is to be stored and sent to the hub. Such instructions are in the form of data defining study parameters, which again is sent with an XML header or incorporated in an XML file, The XML is parsed and the data defining the parameters is sent to the appropriate application within the HES. Alternatively, the study parameters are set locally by an operator.

It can be seen from the above examples that, in the preferred embodiment, the hub is able to manage centrally aspects of the distribution system, although responsibility for the distribution and presentation of data and communication within a local distribution subsystem at a particular site is devolved to applications running at the HES at that site.

As discussed, in the preferred embodiment, the parameters and applications directed to the distribution and presentation of data and communication at a particular local distribution sub-system are transmitted and installed from the hub and data is sent back to the hub, meaning that no local intervention by an operator is required to operate the system. However, an operator is able to intervene locally as required in order to manage or amend such parameters or applications.

By way of further example, the following XML Document Type Definitions (DTDs) define the format of the data being passed between the hub server and the HES in the preferred embodiment:
- Content and correlation of files within a video "package"
- Content and correlation of files within an audio "package"
- LCU software release details
- HES application software release details; content and installation details for files within the software release
- Content and correlation of files within a release of the user interface assets 322
- Content and structure of diagnostic information
- Content and structure of event logs
- Content and structure of usage data

Requests for data in XML format can be requests based upon particular characteristics of the data. For instance, all data of a particular type, for instance referenced by a particular XML tag, may be requested, or some of that data limited by a further criteria; for instance all data of a particular type stored within a particular time period.

### 3. Bookmarking

The bookmarking functionality, which enables users to stop and start streamed services from a defined position, is now discussed.

An overview of the bookmarking process, the generation and storage of bookmark data, and the types of data stored as, or with, the bookmark data is provided. Then specific examples of bookmarking of video, audio, internet-on-TV, and laptop connectivity services are discussed, with state diagrams illustrating possible systems.

In prior art systems, if an MPEG stream is stopped, reselecting it involves a new charge and the service is started again from the beginning.

In preferred embodiments of the present systems, it is possible to ensure that if a stream is stopped for any reason, the exit point is bookmarked, ensure that if an Internet session is stopped the system knows how much access time remains to the user, restart services at a later time from the exit point, display a menu of bookmarked items or services which are available to be resumed/restarted, and reallocate playout resources upon stopping, pausing, or switching playout of content.

Bookmarking allows streamed services to be stopped on user request and then to be restarted from the same position at a later point in time. As the stream is stopped the media resources are freed facilitating better utilisation and availability of the media server.

Various embodiments described herein are directed to the distribution of content. In most such embodiments, such distribution of content may be stopped or paused upon command of a user, usually by operation of a remote control unit. In the preferred embodiment, content is automatically bookmarked when the distribution of that content is stopped or paused or when playout of new content is requested, by storage in a database 340 at a HES of data identifying the content, and data identifying the last portion of content that was transmitted to the local control unit.

For instance, a user may pay for two different films using a video on demand aspect of the system. They may then switch between watching one or other of the films. Each time they switch from watching one film to another, the point in the film at which they switched is bookmarked, and upon switching back to that film, the film is output from the last bookmarked point (or an earlier bookmarked point if selected by the user).

In variants of the preferred embodiment, playout of content can be paused or stopped and bookmarked upon transmission, or request for transmission, of data from the HES to the LCU. Such data can be, for instance, a general announcement, a message, an alarm call, or a fire alarm. Furthermore, a decision as to whether or not to thus pause or stop playout of content and bookmark the content can be made in dependence upon the priority level of the data (for instance a fire alarm would always take priority) and upon user preference, and in accordance with prioritization rules.

Other bookmark data includes encryption information, in particular a key enabling decryption of the content at the bookmarked point, billing information, in particular information relating to payment made by a user for a particular piece of content, entitlement information relating to how much further content a user is entitled to receive, and timing information relating to the time particular content was bookmarked. In particular embodiments, bookmark information is deleted automatically if bookmarked content is not accessed again within a specified time period.

### 3.1 Service State Changes

The following analysis presents a detailed view of the actual actions perform when requests are encountered for various different types of services, namely video, audio, laptop connectivity, and internet-on-TV services.

### 3.1.1 Video

On-demand video streams are initiated through the system. At any point whilst a video stream is playing the user can request to pause or stop that service.

When a guest stops a film by selecting Stop on the remote control or on screen Stop icon bookmarks the stream such that the guest is able to resume the stopped film at a later time from the exit point.

Pausing the service causes the stream to be paused, resulting in a still image on the TV.

After a configurable pause period, the stream is bookmarked resulting in the image being cleared on the TV. The media server resources are cleared.

If the user chooses to resume the service within the pause period then the stream is restarted.

If the user wishes to restart a bookmarked video stream, the system determines the last position, the availability of the appropriate media server resources and then initiates the service from that position.

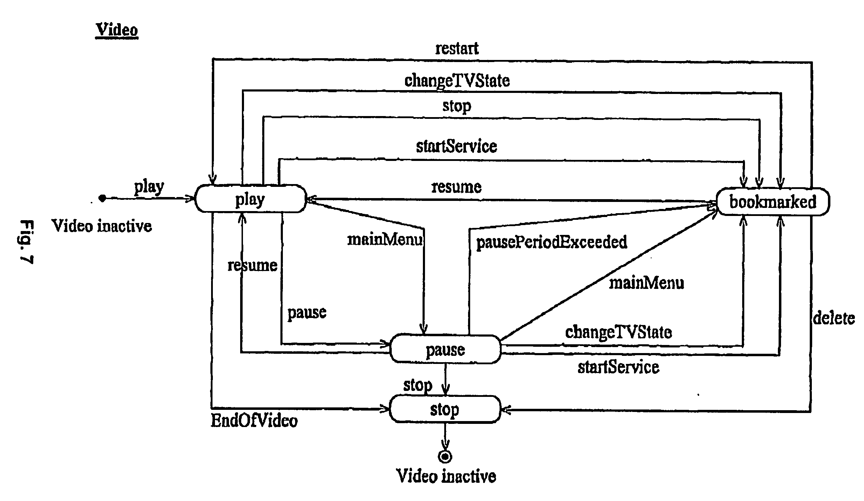

The state diagram of Figure 7 identifies the main states of the video stream and transitions that cause the state changes.

The function StartService referred to in Figure 7 includes or covers Internet-On-TV, Laptop connectivity, messages, announcements, video stream, audio stream, and wake-up call functions.

The function ChangeTVState referred to in Figure 7 includes or covers the functions TV Off (the TV is switched off), TV Standby (the TV is switched to standby) and analogue TV.

The guest has the option of either resuming stopped content from the beginning or resuming the content from the exit point.

In preferred embodiments, the selector screen for launching a service that has been purchased but not completed presents options for Resume, Play from start, or Cancel.

The term StartService, as shown in Figure 7, on the state table means that if a new service is selected while an existing service is still actively allocated to an LCU, the existing service will be automatically bookmarked and closed down.

In alternative embodiments, a Stop transition from the play state in the video state diagram, Figure 7, may be changed to End of Video. Furthermore, a new Stop transition is possible from the play to bookmarked state, and a new Restart transition is possible from the bookmarked to the play state.

### 3.1.2 Audio

On-demand audio streams are initiated through the system. At any point whilst an audio stream is playing the user can request to pause or stop that service. Pausing the services causes the stream to be paused. After a configurable pause period, the stream is bookmarked. The media server resources are cleared.

If the user chooses to resume the service within the pause period then the stream is restarted. If the user wishes to restart a bookmarked audio stream, the system determines the last position, the availability of the appropriate media server resources and then initiates the service from that position.

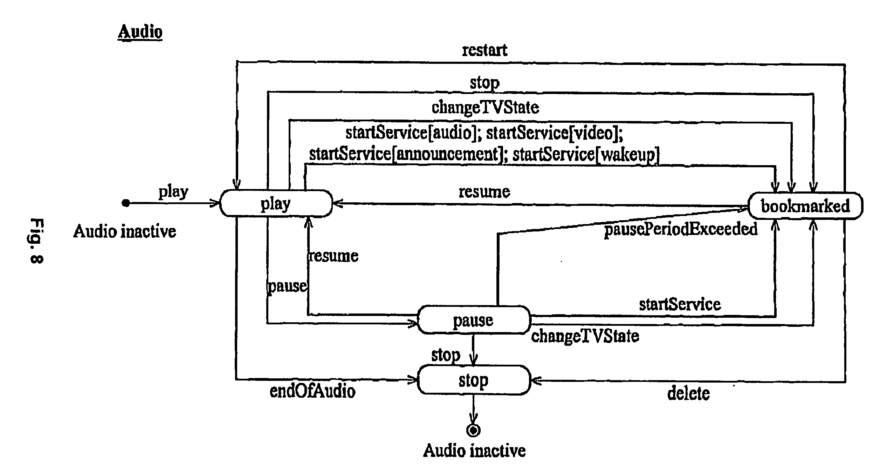

The state diagram of Figure 8 identifies the main states of the audio stream and transitions that cause the state changes.

The functions startService [announcement] and startService [wakeup], shown in Figure 8, refer to all services which require a buzzer.

The bookmarking rules of the audio service are able to take account of the prioritisation level of an announcement. If the announcement priority is associated with a buzzer, the audio stream is bookmarked and terminated.

In alternative embodiments, the Stop transition from the play state in the audio state diagram, Figure 8, may be changed to End of Audio. A new Stop transition is also possible from the play to the bookmarked state, and a new Restart transition is possible from the bookmarked to the play state. The startService transition that defines a move from play to bookmarked, can be extended to include all services that require a buzzer sound.

### 3.1.3 Laptop Connectivity

Users can initiate a Laptop Connectivity session through the system. Sessions are valid for a system configured session period (normally twenty four hours). During this period the user can use, leave and resume their session. If the session exceeds the session period, the user must start a new session.

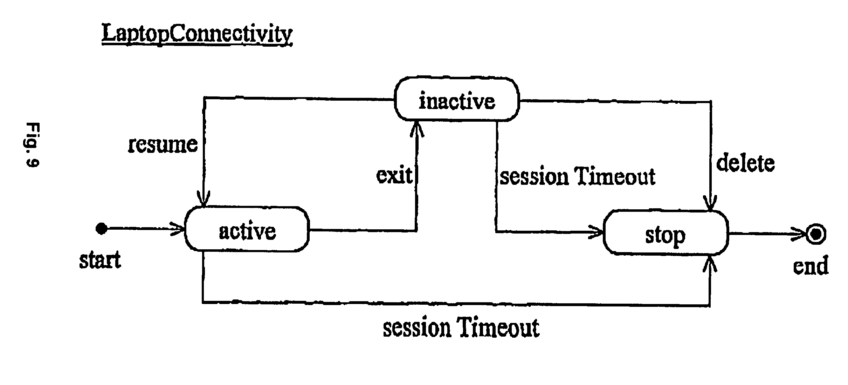

The state diagram of Figure 9 identifies the main states for a Laptop session and the transitions that cause the state changes.

### 3.1.4 Internet-On-TV

Users can initiate an Internet-On-TV session through the system. Sessions are valid for a system configured session period (normally twenty four hours). During this period the user can use, leave and resume their session. If the session exceed the session period, the user must start a new session.

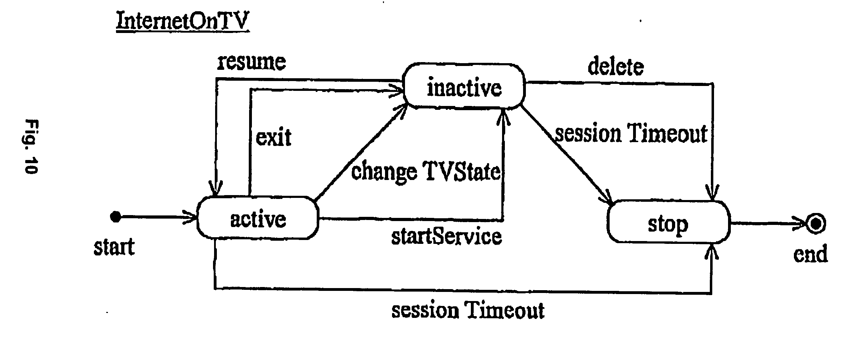

The state diagram of Figure 10 identifies the main states of an Internet-On-TV session and the transitions that cause the state changes,

Other internet session packages, for either Internet on TV or Laptop Connectivity sessions, are available to a user in the preferred embodiment. For instance, a user may be billed based upon the type or quantity of data sent to the user, or based upon connection time. A package purchased by a guest may provide unlimited Internet access within a fixed period of time, or a fixed number of logins, or may provide for charging in proportion to connection time or type or quantity of data transferred, or may provide a unlimited access up to a certain limit, with additional charges for going beyond this limit.

Internet sessions may be bookmarked, taking account of the particular internet session package applicable to a particular user.

It should be noted that, in alternative embodiments, Delete may not be available as a specific option on the Resume Service page.

Furthermore, in particular embodiments, the remote control's special function keys bypass the browser and can therefore lead to an inconsistent state in the browser and the LCU; e. g. if stop is pressed on the remote control, the browser will still assume that a stream is playing whereas the LCU will have requested the stream to stop. Such Special keys may be ignored at the Head-end to avoid this type of inconsistency.

### 3.2 User Experience

The capabilities of the system available to a user in the preferred embodiment are now described. There then follows a more detailed description of menu and control screens which are presented to a user, followed by some discussion of how these menu and control screens are generated by the system.

The following analysis also identifies how the user experience relates to the state diagrams described above.

As described above, a paying service that is stopped before completion is "bookmarked".

This defines the point at which the service will be restarted or for Internet sessions the remaining period of time that can be spent online.

The main menu is updated to present an extra "unfinished content" option.

Once a paying service has been stopped before completion, a menu option "Unfinished content" (or some similar title of maximum 19 characters length) appears on the main menu, as presented to a user. This option is only displayed if there are bookmarked services or uncompleted timed services. Selecting this option leads onto the new pages that allow access to bookmarked streamed content and other stopped services.

If this menu option is selected, the user is taken to a "status screen" showing which specific titles or services e. g. laptop Internet session are uncompleted. These unfinished services are displayed in chronological order with the most recently viewed title uppermost. The screen also shows how much time remains on a service or the time at which access rights lapse. This access time will be defined by time (24 hour clock) and date.

The service status page displays all the bookmarked streamed services and other time based services that the user has started (purchased) and stopped before completion (this could also include an audio stream that is currently playing). The services are displayed with information detailing the time remain (displayed in hours and minutes) and the time at which the service access will cease (displayed as a date and time). The user can navigate through the list of unfinished content and then choose to restart or remove a particular item by selecting a service.

The user is able either to resume a service or delete reference to it on the status screen. This applies specifically to adult material to allow the user to avoid potential embarrassment. Selecting one of these titles or services and pressing OK leads to a screen featuring the selected title/service and offering a choice of resuming the service or deleting the "bookmark", whereas selecting "Delete" returns the user to the status screen.

Selecting "Resume" resumes the services as follows :
- Audio and video services are resumed from their bookmarked position, which is usually the point at which they were stopped.
- Internet-On-TV and Laptop Connectivity services have their sessions resumed.
- An Internet session (where the guest had bought time online) is restarted at the home page allowing the guest to surf for remainder of the time originally purchased.

Except for adult material, PIN or room number entry is not required. Adult services require PIN entry prior to service resumption.

If the guest uses the navigational screens to reselect a service that has not been completed, the service is resumed without further PIN or room number input in the same way as if the service had been selected as described above.

If the service cannot be resumed because, for example, no video stream is available at that time, the guest is shown an advisory screen stating that the user should try again later.

The selected service is displayed with options to resume the service. Selecting Resume causes the service to be restarted:

If the requested service cannot be resumed then appropriate advisory text is displayed. This occurs when an audio or video service cannot be resumed, (e.g. when resources are not available on an appropriate media server), or when an Intemet-On-TV, or Laptop Connectivity session cannot be started (e. g. if the service is over subscribed).

This exception information is recorded in the audit trail.

### 3.3 Menu/Control Screens

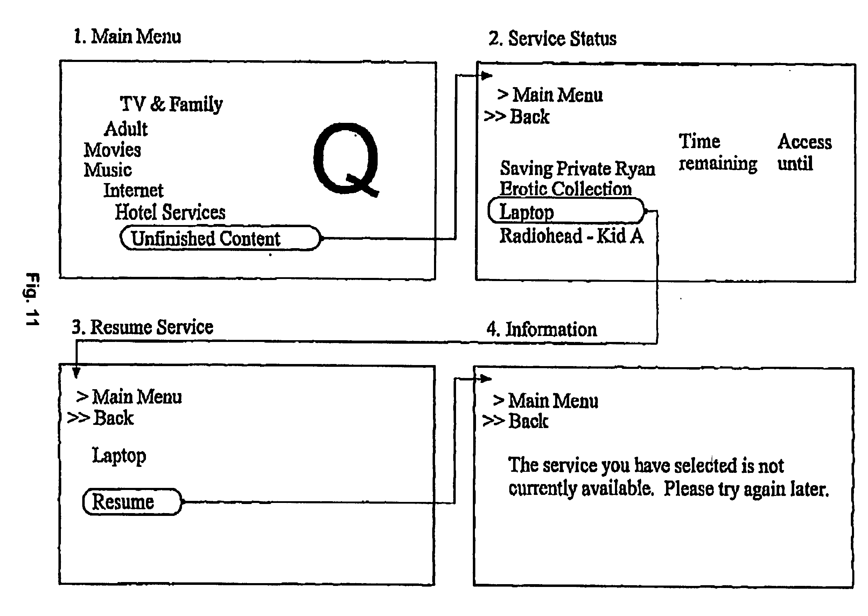

Features of menu and other control screens relating to bookmarking are now described in more detail, with reference to Figure 11.

### 3.3.1 Main Menu

The Main Menu screen has space for seven main menu options: "TV and Family"; "Adult"; "Music"; "Internet"; "Hotel Services"; and "Unfinished Content".

Once a chargeable service has been paid for but not completed, the "Unfinished Content" option appears at the bottom of the visible menu hierarchy. Selecting this option links to a "status screen" which shows which specific titles or services are uncompleted.

A default menu option Is highlighted-for instance by displaying a box around the option.

The default menu option is described below as a focus. For the Main Menu the focus is set on "TV and family": the most popular Main Menu option.

### 3.3.2 Status Screen

The status screen is accessed via the "Unfinished content" option on the Main Menu screen.

The screen lists items of unfinished content, such as movies, music, or internet connection sessions. There is no TV & Movies graphic as unfinished content is combined across all genres.

The screen displays the time remaining for services such as Internet on TV which may be purchased by the hour. The screen also displays "Access until" which shows the time beyond which the service is no longer available. It is necessary to impose a cut off for movies etc if the Hub is attempting to remove old content as part of a schedule. "Access until" is given as a 24 hour clock reference + date defined as a numeral + name of month or abbreviation.

Selecting a title and pressing OK calls the next screen.

The user can return to the Main Menu either by pressing a "Menu" button on the remote control or by selecting a Main Menu option at the top of the screen.

The unfinished services are sorted by order of purchase, most recent purchase uppermost. The focus is set on "more options" if there are any, otherwise on the first unfinished title/service.

### 3.3.3 Delete/Resume Screen

The selected title or service is confirmed on the Delete/Resume screen.

Selecting Cancel and pressing OK on the remote control returns the user to the previous screen, whereas selecting Resume and pressing OK on the remote control restarts an audio or video service from the point at which it was stopped. It is not necessary to input the PIN or room number again.

Resuming an Internet session resumes the service from the Internet home page for a period equal to the remaining session time.

A guest has the facility to delete reference to a title that the guest may not want displayed for reasons of sensitivity.

The stream fires up immediately from the point at which the guest last exited It. The soundtrack is as originally selected.

It is possible that when the guest wishes to resume a service, no video stream is available. An advisory text to this effect is displayed.

### 3.3.4 Access of unfinished content from Main Menu screen

The guest may not notice the unfinished content option in the Main Menu screen, or appreciate its significance. In this case, the user may attempt to reselect a previously purchased film by the familiar route of navigating back through the menu screens. Even if the guest did not appreciate the significance of the Unfinished content option on the Main Menu screen, it is displayed on all menu screens up to the selector screen.

The guest arrives at a selector screen at which he attempts to restart/resume a film which has previously been purchased. The selector screen includes a synopsis of the film and three menu options. The system recognises that the film has already been purchased and the selector screen presents the guest with the options to resume the movie from the exit point, or to restart the movie from the beginning, or to choose again.

Resuming the movie is free, but restarting from the beginning is chargeable. The guest does not need to input the PIN or room number. If the guest wishes to restart the film from the beginning, then the next screen prompts the user to select or reselect a language choice. If the guest does not want to pay again for a previously purchased movie, he has the option of selecting cancel to return to the previous screen. The movie is fired up with on demand buttons being displayed for a configurable period then fading from the screen.

### 3.4 Design Detail

The following section details items which support the functionality described above. In particular, consideration is given to the changes that may need to be made to upgrade a system to support the bookmarking functionality.

In the preferred embodiment, the various menu screens available to a user are in the form of Java Server Pages. Such Java Server Pages include a Bookmark service status page, a service resume/restart page, audioplay.jsp and videoplay.jsp pages which support bookmarking, a purchase.jsp page which requests a PIN on resumption of an adult streamed service, and serviceaod.jsp and serviceaod.jsp pages which allow resume or restart.

Appropriate text and translations are included in the property files.

In order to support the bookmarking functionality, various changes are necessary to Java classes or applications within the system. For instance, the service classes support methods that act on bookmarked and timed services. It may also be necessary to enhance the Gateway Server 20, and to arrange for the HES-LCU API to provide additional information messages.

The database at the HES must be updated to include a new category, a new service and an appropriate configuration to invoke the bookmark status page. Appropriate text and translations must be included in the database.

The Billing Manager may need to be enhanced if a system is upgraded to support Bookmarking.

### 3.5 User actions

As discussed above, the bookmarking on stop function is able to stop an audio or video stream and record the point of exit, to stop an internet session and record the access time remaining (time purchased minus time elapsed), to permit a guest to resume an audio or video service from the point of exit subject to prevailing access rights, to permit a guest to resume an Internet session from the Internet home page for a period equal to the access time remaining. In general, the guest resumes the uncompleted service without being billed again and without having to re-enter a room number or PIN.

A table of some possible user actions and their associated impact on video-on-demand (VoD), audio-on-demand (AoD), Internet on TV, and Laptop Internet services is now provided.

**Table 1**

| **Action** | **Impact** | | | |
|---|---|---|---|---|
| | **VoD** | **AoD** | **Internet on TV** | **Laptop Internet** |
| 1. User selects "stop" using remote control FLOF buttons or the on-screen "stop" functionality. | Stream stopped | Stream Stopped | Session stopped | Session continues |
| 2. User stops by logging out of internet session | n/a | n/a | Session stopped | Session stopped |
| 3. TV switched to standby | Stream stopped | Stream stopped | Session stopped | Session stopped |
| 4. TV powered off | Stream stopped | Stream stopped | Session stopped | Session stopped |
| 5. Second MPEG2 stream selected while an existing MPEG2 stream is already running. In this case, the user will not first have to navigate back to the original stream then close it before reselecting the desired new service. (This functionality assumes that the guest is restricted to one MPEG2 stream at a time, which is not the case in certain embodiments | Original stream stopped | Original stream stopped | n/a | Session continues |
| 6. Internet on TV session launched | Stream stopped | Stream continues | n/a see 8 | Session continues |
| 7. Laptop Internet session launched | Auto pause from menu selection converted to stop | Stream continues | For laptop session to be launched, system would have to move from JVM mode to ANT browser mode. | n/a |
| 8. Pressing "menu" on the remote control or | Stream audio paused | Stream continues | Citrix browser forced to webpage with | Session continues |
| the on screen main menu option (AoD and VoD) | | | advisory text. Choice of terminating session or cancelling selection. | |
| 9. Pressing "TV" on the remote control | Stream stopped | Stream stopped | Session stopped | Session continues |
| 10. Selecting the free to air TV option on the main menu. | Pause (#8 above) converted to Stop | Stream stopped | See 8 | |
| 11. Expiry of the maximum configured period allowed for a "pause" command | Pause converted to stop | Pause converted to stop | n/a | n/a |
| 12. Selection of the on-screen or remote control "Pause" button. | Stream paused | Stream paused | n/a | Session conitunes |
| 13. Receipt of an announcement or message | Stream auto paused | Stream continues | See 8 above | Session continues |
| 14. Any other remote control functionality, the logical effect of which would be to interrupt the original stream (e.g. in certain embodiments, firing up an Internet on TV session or selecting the Alarm function on the remote control.) | Original stream paused or stopped (TBC) | Original stream paused or stopped (TBC) | See 8 above | TBC |

### 4. Allocation of playout resources

The allocation and de-allocation of playout resources is now discussed with reference to Figures 1, 2 and 5.

In preferred embodiments, resources used for distribution of content from a HES 2 to LCUs3 may not be sufficient to enable content to be distributed to all LCUs simultaneously, and thus for all potential users to have access to content at the same time. Typically, such playout resources may be restricted for economic reasons as, although the systems described herein are scaleable and allow all potential users access to content simultaneously if sufficient playout resources are provided, it is unlikely that such demand would arise in most real life situations.

In such preferred embodiments, playout resources are freed automatically when distribution of content to an LCU is paused for a specified period of time, or stopped, and the content is automatically bookmarked, using processes described above. The playout resources can then be allocated to other LCUs as necessary. If the distribution of the original content is resumed, for instance by the user pressing the pause button or the play button on the remote control unit 23, the bookmark information is retrieved, further playout resources are allocated to the LCU, and distribution of the original content is resumed from the point where it was paused or stopped.

Typically, one or more playout computers are linked to or included in the HES. The playout computers include hard discs 350 on which are stored content available for distribution to users, and playout cards 286 which each control the output of a number of data streams, or output channels 360. The database 340 can be located across the or each hard disc 350, or can be located at a separate storage medium, in which case the or each hard disc stores copies of at least some of the data in the database 340. Typically, the HES sends instructions to a playout computer to stream a particular file, for instance containing a film, to a particular IP address, usually the IP address of a particular LCU. The playout computer is responsible for retrieving the appropriate data from a hard disc 350, and for ensuring that the stream is correctly addressed and played out at the appropriate rate. Typically the stream is passed from an output channel 360 of a playout card to a switch, typically an IGMP switch 170, for onward distribution to the appropriate LCU.

The HES monitors the operation of the playout computer or computers, for instance whether all playout channels are already occupied. Upon receipt of a pause command from a particular LCU, and usually after a certain period, bookmark data is stored at the HES, and the HES instructs the playout computer to make available the particular output channel of a playout card which was streaming data to that LCU. If a request for the distribution of bookmarked content to an LCU to be resumed is received by the HES, the bookmark data is retrieved, and an output channel of a playout computer is assigned to that LCU.

More generally, in the preferred embodiment, playout resources, in the form of playout channels of each of the playout cards, can be allocated, by a control means in the form of a processor, to distribute data to any particular LCU and de-allocated to make them available to distribute data to any LCU as required.

This allocation and de-allocation is performed dynamically, if required.

In one example, in the preferred embodiment, a playout channel is allocated to an LCU by a processor, in the form of the Media Manager 311 component of the HES, in response to a request for data from that LCU, and data is streamed to the LCU via that playout channel.

During streaming of the data, the playout channel is de-allocated and another playout channel is allocated to continue the streaming of the data. The allocation and de-allocation of the channels is performed simultaneously so that data is streamed continuously to the LCU, or, in a variant of the preferred embodiment, so that the impression is given to a user that the data is streamed continuously.

In variants of the preferred embodiment, the do-allocation of a playout channel and the allocation of another playout channel does not occur simultaneously. In such case, data is cached during the changeover period, at a memory at the LCU or at the HES, in order to ensure a continuous streaming of data.

A first playout channel is dynamically replaced, under control of a processor, by a second playout channel in the streaming of data to an LCU, in one example, if the first playout channel becomes inoperable due to a fault.

### 5. Redirection of requests for data

In the preferred embodiment, users are able to access the internet via an Intemet-on-TV application or via a portable or other computer connected via an Ethernet port 16 or serial port 18.

Requests for connection to an internet site pass from the LCU to the HES, then through the firewall 7, and are then forwarded to the addressed internet site if they match criteria which are assessed by the firewall and if an internet connection is available.

If, for instance, a requested web page is understood potentially to contain inappropriate content as specified by the firewall 7 under the control of the HES 2, then the request for data is stopped by the firewall, and data is returned to the LCU, for display to a user, stating that the requested web page is unavailable.

Furthermore, if it is not possible to satisfy the request for data, for instance if an internet connection is not available or if a component of the local system is inoperable, then again data is returned to the LCU, for display to a user, stating that the requested data is unavailable.

In the preferred embodiment, the HES, by control of the firewall is able to control the data sent to a user in response to a request for data, for instance internet data, independently of any characteristics of the particular data requested and whether or not the particular data requested is available.

In the preferred embodiment, for instance, whenever an internet session is started then regardless of what internet data is requested by the user, preferred web page data is sent to the LCU. For instance, the hotel's own web page data may sent to the LCU. Subsequent requests for data are then processed normally, and requested data is returned to the user, if available or if allowed.

In this example, the request for data is replaced with a request for the hotel's own web page data.

A processor and a memory are provided at the HES to determine when an internet session is started and to return the preferred data to the LCU upon receipt of the first request for data.

Various other criteria can be specified by the processor to determine how requests for data, particularly internet data, are processed. For instance, a user may be limited to access only certain internet sites unless they have purchased the appropriate billing option, or a user may have to input an identifier and may only be allowed access to particular internet sites in dependence upon this identifier. If they are not allowed access, then requests for data will be replaced with requests for other data independently of the characteristics of the data requested.

### 6. Interleaved Content

Aspects of the system relating to the interleaving of content are now described, in particular, the interleaving of different types of content in transmissions between a HES and an LCU, with references to Figures1, 2 and 3. Various capabilities of the system which derive from the interleaving of content are discussed in more detail, particularly the interleaving of Internet and audio/visual data, and the impression given to a user that at least one apparently continuous stream of data can be delivered in real time simultaneously with the delivery of other data. The interleaving of more than two sets of data and the selective control of one or more interleaved sets of data upon command of a user are also discussed.

A variety of data is transmitted between the HES and an LCU, in particular audio/visual data, particularly digital television/video signals, text data, still images, moving images, EPGs, games, computer data particularly computer programmes or internet data. In preferred embodiments sets of such data are divided into portions and portions of one set of data are interleaved with portions of another set of data.

The first set of data may be a particular piece of content, for instance a film, and the second set of data may be another piece of content, for instance another film.

The portions of the first data set and the portions of the second data set are usually interleaved temporally within a data stream. Typically, each portion of the first data set is transmitted in a respective one of a first set of packets, and each portion of the second data set is transmitted in a respective one of a second set of packets, the packets usually being IP packets.

Upon receipt at an LCU, the portions of the first set of data are processed to form the first set of data, and the portions of the second set of data are processed to form the second set of data.

The portions of the first set of data and the portions of the second set of data can also be retransmitted to an output device without first being recombined. For instance, in one example, the first set of data is audio/visual data in MPEG format, representing a film, and each packet containing a portion of the first set of data is received by the LCU and then streamed to a television connected to the LCU in real time. The second set of data is internet data, and each packet containing a portion of the second set of data is received at the LCU, and streamed to a computer connected to the LCU.

If the size and contents of the Interleaved packets of data are chosen appropriately, by an application at the HES, the impression can be given to the user that at least one continuous stream of data is being received, when in fact two interleaved sets of data are being received.

The LCU, either upon command of a user or automatically is able to control independently the transmission of any of the interleaved sets of data transmitted from the HES to the LCU.

The interleaving of content is particularly advantageous when an LCU is connected to more than one device, as it enables content to be transmitted to, and for the HES to communicate with each device, via the LCU, simultaneously.

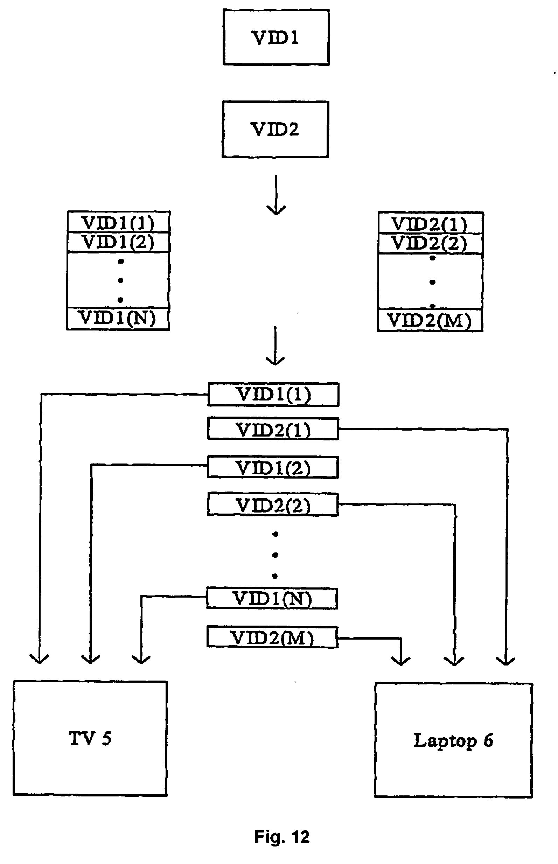

An example of the interleaving of content is given in Figure 12,

A first video asset (VID1) is transmitted to the HES 2 over the satellite link 52,54,56 shown in Figure 1 and stored by the HES 2.

A second video asset (VID2) is subsequently transmitted to the HES 2 over the satellite link and stored by the HES 2.

LCU 3 requests that VID1 be played in real time on television set 5, and that VID2 be simultaneously played in real time on laptop 6.

The Media Manager divides VID1 and VID2 into N respective packets of data VID1 (1), VID1 (2)... VID1 (N); and VID2(1), VID2 (2)... VID2(N). The N packets of data are then transmitted in interleaved form VID1(1), VID2(1), VID1 (2), VID2 (2) etc. Each packet is then received by LCU 3 and directed to either television 5 or laptop 6 as appropriate.

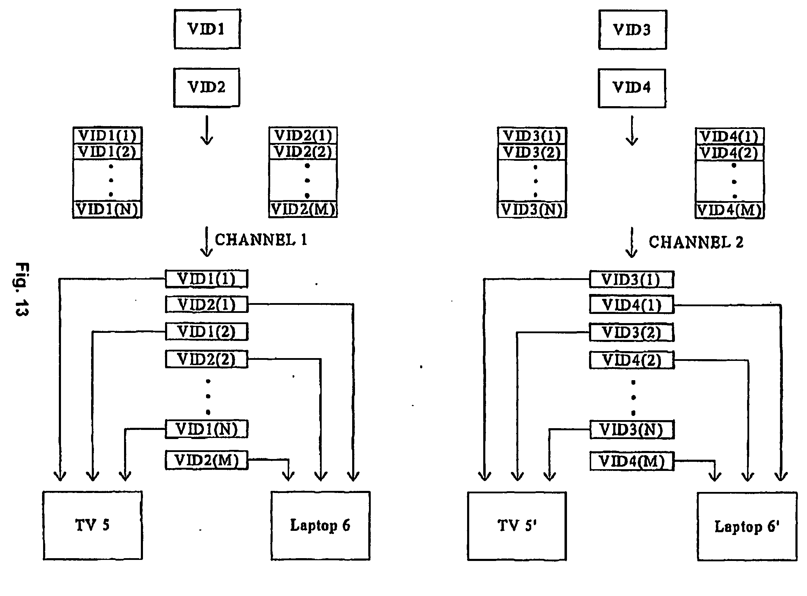

Figure 13 illustrates the simultaneous output of four videos VID1, VID2 (from TV 5 and Laptop 6 as described above) and VID3 and VID4 (from TV 5' and Laptop 6' attached to a different LCU).

VID1 and VID2 are transmitted in interleaved form to a first LCU (designated in Figure 12 by the label "CHANNEL 1 "), and VID3 and VID4 are transmitted in interleaved form to a second LCU (designated in Figure 12 by the label "CHANNEL 2").

Preferably each packet of data VID1(I), VID2(1), VID3(1), VID4(1) etc is an IP packet containing an IP address of the correct LCU. Alternatively the signals may be frequency multiplexed and each LCU would have its own dedicated frequency channel.

Although in the example given above,VID1-VID4 are previously received and stored by the HES 2, it will be understood that one or more of the video assets may be received and immediately forwarded (interleaved with another video asset) to an LCU, without an intermediate storage step.

In an alternative embodiment, audio/video signals (for instance VID1 (1), VID2 (2)... VID1 (N)) may be interleaved with internet signals, enabling a user to surf the internet using laptop 6 whilst watching a movie on television 5.

In a further embodiment the HES may send an information or error message to the user (for instance, the user may have reached some time limit related to billing) and the transmission of audio/visual data and/or internet signals is interrupted whilst the message is displayed on the television 5 or laptop 6. Upon response of the user to the message, (for instance by sending a signal to the LCU using the remote control unit, in response to which the LCU sends a message to the HES), interruption period is terminated and the transmission of the audio/visual data and/or internet signals is resumed. In a variant of this embodiment, the audio/visual data and internet signals continue to be transmitted along with the message data (i.e. interleaving of three sets of data), and the audio/visual data and/or internet signals are buffered whilst the message data is displayed.

Although the video assets VIDI, VID2 in Figure 12 are received and retransmitted by the LCU in real-time, it will be understood that different types of interleaved content may be processed, stored or routed in different ways. For instance some packets of data may be combined at the LCU before storage or retransmission to a connected device.

### 7. Capabilities of System

Some capabilities of the preferred embodiment within hotels are now described. The same or similar capabilities also obtain for variants of the preferred embodiment in environments other than hotels.

The system provides up-totthe-minute customised content-by pan-European satellite, with full on-demand programming in multiple languages, and hotel services direct to the guest. One can gain revenue from programmes specially made for a guest, with tailored solutions, based on factors such as guest profile, occupancy rates and room yield.

The system offers new services, upgrading technology and managing content.

All services offered are the result of extensive research into the demands of both guests and hoteliers. All new services are based on ongoing research. The system offers up to the minute customised content specially made for each guest, with designed services to reflect guests' in-room behaviour.

The system is the first to record every instruction on the server.

The system provides a digital 'jukebox' for hotel guests. The choice of albums is reviewed and updated regularly to meet guests' demands.

The system also provides a single, secure link to a hotel's property management system.

Important added value services have been designed to increase staff productivity and improve guest satisfaction.

The system can pass messages to individual guests, and target information to specific groups of guests, such as informing conference delegates of meeting times and venues.

### 8. Altemative Embodiments

Many of the embodiments as described herein (in any aspect or embodiment) are directed to systems within hotels and their installation and use. However, the embodiments, and the systems, methods and features, described herein are also readily installed and used within other environments, in particular multi-user or multi-room environments. Such environments include, in particular:-
- Ships, particularly cruise ships
- Aeroplanes
- Trains
- Hospitals
- Multi-dwelling units, for instance blocks of flats, or condominiums
- Groups of houses
- Offices or groups of offices, factories, shops or groups of shops, schools and other work, commercial or educational environments
- Stations, airports and other transport termini.

Indeed, one of the features of the preferred embodiments is that they are readily transferable between various environments, such as those described above, with little or no modification.

Accordingly, references to a guest shall be taken to include any user of any such embodiment in any such environment.

A feature of the preferred embodiments is that the signals, data or information which are distributed are not limited to audio/visual, particularly television, signals, data or information, nor are preferred embodiments limited to providing entertainment services.

Indeed preferred embodiments provide general information, messaging services, alarm calls, pricing and billing information, educational material, documents in electronic format, or indeed any type of material which can be stored or transmitted electronically and retrieved or received by a local server.

In particular embodiments, within hospitals, the system is used to provide messaging, alarm calls, and scheduling information to nurses, doctors and other hospital staff. In some such embodiments, local control units, or in the alternative local servers, are linked to pagers carried by staff.

In particular embodiments within schools, colleges, universities and other educational environments, the system is used to provide educational material, such as lecture notes, textbook material, and audio/visual material, and to enable communication between teachers and students, as well as providing general messaging, timetable and information services.

I n particular embodiments within groups of houses, the system is used to provide entertainment, such as terrestrial and satellite television, radio, audio, video on demand, scheduled films, and games, educational material such as textbook material, lessons, lecture notes, and audio/visual material, advertising, both general and targeted, banking and other financial services, shopping services, and general information.

In particular embodiments within hotels, ships, trains, aeroplanes, stations, and airports, the system is used to provide, in addition to some of the material and services described above, timetable, ticketing, reservation, weather and other travel related information.

In particular embodiments within offices, factories and other work environments, the system is used to provide, in addition to some of the material and services described above, access to documents in electronic form, recordal of employee attendance, diary and scheduling services, payroll information and services, training material, and logistical information.

The following is applicable to any aspect or embodiment as described herein, or as illustrated in the accompanying drawings.

Features which relate to the storage of information may be implemented by suitable memory locations or stores. Features which relate to the processing of information may be implemented by a suitable processor or control means, either in software or in hardware or in a combination of the two.

Analogous method steps to any of the apparatus features described anywhere herein are provided within the scope of the invention, and vice versa. In any or all of the aforementioned, different features and aspects described above, including method and apparatus features and aspects, may be combined in any appropriate fashion.

It will be understood that the present invention (s) has been described above purely by way of example, and modifications of detail can be made within the scope of the invention.

Each feature disclosed in the description, and (where appropriate) the Claims and drawings may be provided independently or in any appropriate combination.

## Claims

1. An audio/visual content distribution system, comprising:
- local distribution sub-systems (50), each including as components at least a head-end server (2) including a gateway server (20) providing a data connection to the internet (10), and a plurality of receivers connected to the head end server (2) by means of a digital network (11), the head-end server (2) comprising storage means (350) for storing audio/visual content and being adapted to manage distribution of audio/visual content data to thee receivers within the local distribution sub-system (50);
- means (311) for providing for each receiver a menu of audio/visual content stored at the respective head-end server (2) and available for distribution within the local distribution sub-system (50);
- means (311) for receiving at the respective head-end server (2) a request from at least one of the receivers for audio/visual content;
- means (311) for sending the requested audio/visual content data from the respective head-end server (2) to the or each receiver that requested the audio/visual contents over the digital network (11);
wherein
- each receiver comprises a local control unit (3) and an audio/visual display (5), the local control unit (3) comprising a main network port (17) having an IP address by which the display (5) is connected to the network (11) so as to receive audio/visual content from the head end server (2),
**characterised in that** the local control unit (3) also comprises a guest port (16) by which a laptop computer (6) can be connected to the network (11) so as to communicate with the internet (10) via the gateway server (20), the system being configured to route audio/visual content data and internet data from the head end server (2) via the digital network (11) to the local control unit (3); and to direct audio/visual content to the main network port (17), and internet data to either the main network port (17) or the guest port (16), wherein the head end server (2) provides an IP address for the guest port (16); an IP address to assign to the laptop computer (6); and a netmask which describes the two addresses as being on the same subnet while providing differentiation from the IP address of the main network port (17); such that when the laptop computer (6) has a DHCP client and broadcasts a request for a DHCP server to the guest port (16), the local control unit (3) responds with the assigned IP address, DNS server setting and itself as the default gateway.

2. A system as claimed in claim 1, wherein the main network port (17) and the guest port (16) are Ethernet ports.

3. A system as claimed in claim 1 or 2 wherein the local control unit (3) can receive input from a separate remote control device (23) for controlling the audio/visual display device (5).

4. A system as claimed in any preceding claim, wherein the main network port (17) also provides an internet connection for the audio/visual display device (5).

5. A system as claimed in any preceding claim, for providing audio/visual content to rooms in hotels, wherein a head-end server (2) is located in each hotel and a plurality of receivers are located in rooms (112) in the hotels, each receiver comprising a local control unit (3) and a television (5).

6. A system as claimed in claim 5, wherein each head-end server (2) records instructions communicated by a user in the user's room (112) to or via the local control unit (3) and/or the television (5).

7. A system as claimed in any preceding claim, wherein the gateway server (20) controls and monitors connections between a laptop computer (6) attached to the local control unit (3) and a firewall (7) that connects the hotel to the Internet (10); and ensures that packets are routed securely to their inbound or outbound destination, manages the sessions, including initiation and termination, and monitors traffic flows and collect statistics.

8. A method of distributing audio/visual content in a system as claimed in any preceding claim, comprising:
- routing audio/visual content data and internet data from the head end server (2) via the digital network (11) to the local control unit (3); and
- directing audio/visual content to the main network port (17), and internet data to either the main port (17) or the guest port (16),
wherein the head end server (2) provides an IP address for the guest port (16); an IP address to assign to the laptop computer (6); and a netmask which describes the two addresses as being on the same subnet while providing differentiation from the IP address of the main network port (17); such that when the laptop computer (6) has a DHCP client and broadcasts a request for a DHCP server to the guest port (16), the local control unit (3) responds with the assigned IP address, DNS server setting and itself as the default gateway.

9. A method as claimed in claim 8, further comprising converting digital audio/visual content data in the local control unit (3) to analogue data before passing the analogue content to the display (5).

10. A method as claimed in claim 8 or 9, wherein traffic from the laptop compute (6) is routed from the local control unit (3) to the gateway server (20) of the head end server (2), and traffic to the laptop computer (6) is routed through the guest port (16) of the local control unit (3).

11. A method as claimed in any of claims 8-10, further comprising using the local control unit (3) for access to internet services via the display device (5).

## Patentansprüche

1. System zur Verteilung von Audio-/Videoinhalt, umfassend:
- lokale Verteilungs-Subsysteme (50), die jeweils als Komponenten mindestens einen Headend-Server (2) mit einem Gateway-Server (20), der eine Datenverbindung zum Internet (10) bereitstellt, und mehrere mittels eines digitalen Netzwerks (11) mit dem Headend-Server (2) verbundene Empfänger enthalten, wobei der Headend-Server (2) Speichermittel (350) zum Speichern von Audio-/Videoinhalt umfasst und dafür ausgelegt ist, die Verteilung von Audio-/Videoinhaltsdaten zu drei Empfängern in dem lokalen Verteilungs-Subsystem (50) zu verwalten;
- ein Mittel (311) zum Bereitstellen eines Menüs von in dem jeweiligen Headend-Server (2) gespeichertem und für Verteilung innerhalb des lokalen Verteilungs-Subsystem (50) verfügbarem Audio-/Videoinhalt für jeden Empfänger;
- ein Mittel (311) zum Empfangen einer Anforderung von Audio-/Videoinhalt von mindestens einem der Empfänger in dem jeweiligen Headend-Server (2);
- ein Mittel (311) zum Senden der angeforderten Audio-/Videoinhaltsdaten von dem jeweiligen Headend-Server (2) zu dem oder jedem Empfänger, der die Audio-/Videoinhalte angefordert hat, über das digitale Netzwerk (11); wobei
- jeder Empfänger eine lokale Steuereinheit (3) und eine Audio-/Videoanzeige (5) umfasst, wobei die lokale Steuereinheit (3) einen Hauptnetzwerkport (17) mit einer IP-Adresse umfasst, mit dem die Anzeige (5) mit dem Netzwerk (11) verbunden wird, um so Audio-/Videoinhalt von dem Headend-Server (2) zu empfangen,
**dadurch gekennzeichnet, dass** die lokale Steuereinheit (3) außerdem einen Gastport (16) umfasst, mit dem ein Laptop-Computer (6) mit dem Netzwerk (11) verbunden werden kann, um so über den Gateway-Server (20) mit dem Internet (10) zu kommunizieren, wobei das System dafür ausgelegt ist, Audio-/Videoinhaltsdaten und Internetdaten von dem Headend-Server (2) über das digitale Netzwerk (11) zu der lokalen Steuereinheit (3) zu routen; und Audio-/Videoinhalt zu dem Hauptnetzwerkport (17) und Internetdaten entweder zu dem Hauptnetzwerkport (17) oder dem Gastport (16) zu leiten, wobei der Headend-Server (2) eine IP-Adresse für den Gastport (16); eine dem Laptop-Computer (6) zuzuweisende IP-Adresse; und eine Netzmaske, die die beiden Adressen als sich in demselben Subnetz befindend beschreibt, während Differenzierung von der IP-Adresse des Hauptnetzwerkports (17) gewährleistet wird, bereitstellt, so dass, wenn der Laptop-Computer (6) einen DHCP-Client aufweist und eine Anforderung eines DHCP-Servers zu dem Gastport (16) rundsendet, die lokale Steuereinheit (3) mit der zugewiesenen IP-Adresse, der DNS-Servereinstellung und sich selbst als dem Vorgabe-Gateway antwortet.

2. System nach Anspruch 1, wobei der Hauptnetzwerkport (17) und der Gastport (16) Ethernet-Ports sind.

3. System nach Anspruch 1 oder 2, wobei die lokale Steuereinheit (3) Eingaben von einer separaten Fernbedienungseinrichtung (23) zur Steuerung der Audio-/Videoanzeigeeinrichtung (5) empfangen kann.

4. System nach einem der vorhergehenden Ansprüche, wobei der Hauptnetzwerkport (17) außerdem eine Internetverbindung fur die Audio-/Videoanzeigeeinrichtung (5) bereitstellt.

5. System nach einem der vorhergehenden Ansprüche zum Bereitstellen von Audio-/Videoinhalt für Zimmer in Hotels, wobei sich in jedem Hotel ein Headend-Server (2) befindet und sich in Zimmern (112) in den Hotels mehrere Empfänger befinden, wobei jeder Empfänger eine lokale Steuereinheit (3) und einen Fernseher (5) umfasst.

6. System nach Anspruch 5, wobei jeder Headend-Server (2) Anweisungen aufzeichnet, die durch einen Benutzer in dem Zimmer (112) des Benutzers zu der lokalen Steuereinheit (3) und/oder dem Fernseher (5) oder darüber übermittelt werden.

7. System nach einem der vorhergehenden Ansprüche, wobei der Gateway-Server (20) Verbindungen zwischen einem an die lokale Steuereinheit (3) angeschlossenen Laptop-Computer (6) und einer Firewall (7), die das Hotel mit dem Internet (10) verbindet, steuert und überwacht; und sicherstellt, dass Pakete gesichert zu ihrem ankommenden oder abgehenden Ziel geroutet werden, die Sitzungen, einschließlich Initiierung und Abschluss, verwaltet und Verkehrsflüsse überwacht und Statistiken sammelt.

8. Verfahren zur Verteilung von Audio-/Videoinhalt in einem System nach einem der vorhergehenden Ansprüche, mit den folgenden Schritten:
- Routen von Audio-/Videoinhaltsdaten und Internetdaten von dem Headend-Server (2) über das digitale Netzwerk (11) zu der lokalen Steuereinheit (3); und
- Leiten von Audio-/Videoinhalt zu dem Hauptnetzwerkport (17) und von Internetdaten entweder zu dem Hauptport (17) oder dem Gastport (16), wobei der Headend-Server (2) eine IP-Adresse für den Gastport (16); eine dem Laptop-Computer (6) zuzuweisende IP-Adresse; und eine Netzmaske, die die beiden Adressen als sich in demselben Subnetz befindend beschreibt, während Differenzierung von der IP-Adresse des Hauptnetzwerkports (17) gewährleistet wird, bereitstellt, so dass, wenn der Laptop-Computer (6) einen DHCP-Client aufweist und eine Anforderung eines DHCP-Servers zu dem Gastport (16) rundsendet, die lokale Steuereinheit (3) mit der zugewiesenen IP-Adresse, der DNS-Servereinstellung und sich selbst als dem Vorgabe-Gateway antwortet.

9. Verfahren nach Anspruch 8, ferner mit dem Schritt des Umsetzens von digitalen Audio-/Videoinhaltsdaten in der lokalen Steuereinheit (3) in analoge Daten vor dem Weiterleiten des analogen Inhalts zu der Anzeige (5).

10. Verfahren nach Anspruch 8 oder 9, wobei Verkehr aus dem Laptop-Computer (6) aus der lokalen Steuereinheit (3) zu dem Gateway-Server (20) des Headend-Servers (2) geroutet wird; und Verkehr zu dem Laptop-Computer (6) durch den Gastport (16) der lokalen Steuereinheit (3) geroutet wird.

11. Verfahren nach einem der Ansprüche 8-10, ferner mit dem Schritt des Verwendens der lokalen Steuereinheit (3) für Zugang zu Internetdiensten über die Anzeigeeinrichtung (5).

## Revendications

1. Système de distribution de contenu audio/visuel, comprenant :
- des sous-systèmes de distribution locale (50), comportant chacun comme composants au moins un serveur de tête (2) comportant un serveur passerelle (20) établissant une connexion de données avec le réseau Internet (10), et une pluralité de récepteurs connectés au serveur de tête (2) au moyen d'un réseau numérique (11), le serveur de tête (2) comprenant des moyens de stockage (350) destinés à stocker du contenu audio/visuel et conçus pour gérer la distribution de données de contenu audio/visuel aux récepteurs au sein du système de distribution locale (50) ;
- des moyens (311) destinés à présenter, pour chaque récepteur, un menu du contenu audio/visuel stocké au niveau du serveur de tête (2) respectif et disponible à la distribution au sein du sous-système de distribution locale (50) ;
- des moyens (311) destinés à recevoir au niveau du serveur de tête (2) respectif une demande de contenu audio/visuel émanant d'au moins un des récepteurs ;
- des moyens (311) destinés à envoyer les données du contenu audio/visuel demandé du serveur de tête (2) respectif au ou à chaque récepteur qui a demandé le contenu audio/visuel sur le réseau numérique (11) ;
- chaque récepteur comprenant un module de commande local (3) et un affichage audio/visuel (5), le module de commande local (3) comprenant un port de réseau principal (17) possédant une adresse IP permettant de connecter l'affichage (5) au réseau (11) pour recevoir le contenu audio/visuel du serveur de tête (2),
le système étant **caractérisé en ce que** le module de commande local (3) comprend également un port de client (16) permettant de connecter un ordinateur portable (6) au réseau (11) de manière à communiquer avec le réseau Internet (10) par le biais du serveur passerelle (20), le système étant configuré pour acheminer des données de contenu audio/visuel et des données Internet du serveur de tête (2) au module de commande local (3) par le biais du réseau numérique (11) et pour diriger le contenu audio/visuel vers le port de réseau principal (17) et les données Internet soit vers le port de réseau principal (17) soit vers le port de client (16),
le serveur de tête (2) fournissant une adresse IP pour le port de client (16), une adresse IP destinée à être attribuée à l'ordinateur portable (6), et un masque de sous-réseau qui décrit les deux adresses comme étant associées au même sous-réseau tout en établissant une différenciation vis-à-vis de l'adresse IP du port de réseau principal (17), si bien que lorsque l'ordinateur portable (6) possède un client DHCP et transmet une demande de serveur DHCP au port de client (16), le module de commande local (3) répond avec l'adresse IP attribuée, le paramétrage de serveur DNS et lui-même comme passerelle par défaut.

2. Système selon la revendication 1, le port de réseau principal (17) et le port de client (16) étant des ports Ethernet.

3. Système selon la revendication 1 ou 2, le module de commande local (3) étant capable de recevoir une entrée en provenance d'un dispositif de commande à distance distinct (23) destiné à commander le dispositif d'affichage audio/visuel (5).

4. Système selon l'une quelconque des revendications précédentes, le port de réseau principal (17) établissant également une connexion Internet pour le dispositif d'affichage audio/visuel (5).

5. Système selon l'une quelconque des revendications précédentes, destiné à fournir du contenu audio/visuel à des chambres d'hôtels, un serveur de tête (2) étant placé dans chaque hôtel et une pluralité de récepteurs étant placés dans des chambres (112) des hôtels, chaque récepteur comprenant un module de commande local (3) et un téléviseur (5).

6. Système selon la revendication 5, chaque serveur de tête (2) enregistrant des instructions communiquées, par un utilisateur dans la chambre (112) de l'utilisateur, à ou par le biais du module de commande local (3) et/ou du téléviseur (5).

7. Système selon l'une quelconque des revendications précédentes, le serveur passerelle (20) gérant et contrôlant des connexions entre un ordinateur portable (6) relié au module de commande local (3) et un pare-feu (7) connectant l'hôtel au réseau Internet (10), et veillant à l'acheminement sécurisé de paquets jusqu'à leur destination d'arrivée ou de départ, gérant les sessions, notamment de lancement et de clôture, et contrôlant les flux de trafic et collectant des statistiques.

8. Procédé de distribution de contenu audio/visuel dans un système selon l'une quelconque des revendications précédentes, comprenant les étapes consistant à :
- acheminer des données de contenu audio/visuel et des données Internet du serveur de tête (2) au module de commande local (3) par le biais du réseau numérique (11) ; et
- diriger le contenu audio/visuel vers le port de réseau principal (17) et les données Internet soit vers le port principal (17) soit vers le port de client (16),
le serveur de tête (2) fournissant une adresse IP pour le port de client (16), une adresse IP destinée à être attribuée à l'ordinateur portable (6), et un masque de sous-réseau qui décrit les deux adresses comme étant associées au même sous-réseau tout en établissant une différenciation vis-à-vis de l'adresse IP du port de réseau principal (17), si bien que lorsque l'ordinateur portable (6) possède un client DHCP et transmet une demande de serveur DHCP au port de client (16), le module de commande local (3) répond avec l'adresse IP attribuée, le paramétrage de serveur DNS et lui-même comme passerelle par défaut.

9. Procédé selon la revendication 8, comprenant en outre l'étape consistant à convertir des données numériques de contenu audio/visuel dans le module de commande local (3) en des données analogiques avant de transmettre le contenu analogique à l'affichage (5).

10. Procédé selon la revendication 8 ou 9, le trafic en provenance de l'ordinateur portable (6) étant acheminé du module de commande local (3) au serveur passerelle (20) du serveur de tête (2), et le trafic à destination de l'ordinateur portable (6) étant acheminé par l'intermédiaire du port de client (16) du module de commande local (3).

11. Procédé selon l'une quelconque des revendications 8 à 10, comprenant en outre l'étape consistant à utiliser le module de commande local (3) pour accéder à des services Internet par le biais du dispositif d'affichage (5).
